# EUROPÄISCHE PATENTSCHRIFT

(11) **EP 2 999 725 B1**
(45) Veröffentlichungstag und Bekanntmachung des Hinweises auf die Patenterteilung: **16.01.2019**
(21) Anmeldenummer: 14730425.7
(22) Anmeldetag: 22.05.2014
(51) Int. Cl.: C08F 220/56, C08K 3/08, C09K 8/68

(54) **TEMPERATURSTABILES, ELEKTROLYTHALTIGES HYDROGEL UND VERFAHREN ZUM STIMULIEREN VON ERDÖL- UND ERDGASLAGERSTÄTTEN**
TEMPERATURE-STABLE, ELECTROLYTIC HYDROGEL AND METHOD FOR STIMULATING CRUDE OIL AND NATURAL GAS DEPOSITS
HYDROGEL CHARGÉ EN ÉLECTROLYTES STABLE EN TEMPÉRATURE ET PROCÉDÉ DE STIMULATION DE GISEMENTS DE PÉTROLE ET DE GAZ NATUREL

(30) Priorität: 23.05.2013 DE 102013008769
(43) Veröffentlichungstag der Anmeldung: 30.03.2016
(73) Patentinhaber: TouGas Oilfield Solutions GmbH, 60314 Frankfurt am Main (DE)
(72) Erfinder: DUGONJIC-BILIC, Fatima, 63075 Offenbach (DE); USENER, Carolin, 48249 Dülmen (DE); NEUBER, Marita, 63303 Dreieich (DE); PFAHLS, Margarethe, 60386 Frankfurt am Main (DE); WISSEL, Marion, 63776 Mömbris (DE)
(74) Vertreter: Mai Dörr Besier European Patent Attorneys
(86) Internationale Anmeldenummer: PCT/EP2014/001380
(87) Internationale Veröffentlichungsnummer: WO 2014/187565

(56) Entgegenhaltungen:
- EP-A1- 2 166 060
- US-A1- 2006 019 835
- US-B2- 6 986 391
- US-B2- 8 022 015

## Beschreibung

Die vorliegende Erfindung betrifft ein temperaturstabiles, elektrolythaltiges Hydrogel und dessen Einsatz bei der Förderung von Erdöl und Erdgas aus unkonventionellen oder weit ausgebeuteten Lagerstätten.

Die Lagerstätten fossiler Energieträger sind weit ausgebeutet und die Reserven sind begrenzt. Mit neuen und weiterentwickelten Technologien lassen sich Erdöl- und Erdgaslagerstätten aber weiter ausbeuten bzw. es können auch unkonventionelle Lagerstätten erschlossen werden.

Unkonventionelle Erdgas-Lagerstätten weisen eine deutliche geringere Permeabilität aus als konventionelle. Aus fördertechnischer Sicht bedeutet diese geringe Ausgangspermeabilität, dass die Durchlässigkeit des Gebirges unter bestimmten Umständen mit entsprechenden Stimulationsmaßnahmen (hydraulisches Aufbrechen, englisch auch "hydraulic fracturing" oder "fracking" genannt) vor der Gewinnung künstlich erhöht werden muss.

Dazu wird unter hohem Druck in die Bohrung eine Flüssigkeit ("Fractfluid") eingepresst, um im Reservoirgestein Risse zu erzeugen, aufzuweiten und diese durch Stützkörper, wie Sand oder Keramikkügelchen zu stabilisieren.

Dadurch wird die Gas- und Flüssigkeitsdurchlässigkeit der Gesteinsschicht erhöht, damit Fluide, wie Erdgas, Erdöl oder Wasser leichter zur Bohrung hin fließen können. Dies erhöht die Wirtschaftlichkeit der Erdöl-und Erdgasförderung. Auch auf dem Gebiet der Geothermiebohrungen kann mit der Methode des hydraulischen Aufbrechens die Ergiebigkeit von Wasserreservoiren erhöht werden. Nach der Stimulation wird das warme Gestein besser von Wasser durchströmt und nimmt mehr Wärme auf. Auch die Stimulation von Grundwasserbrunnen kann durch diese Methode erfolgen. Weiterhin bietet es sich in einigen Fällen an, Bohrungen zur langfristigen Vorentgasung in Steinkohlegruben hydraulisch aufzubrechen.

In bestehenden herkömmlichen Öl-und Gasfeldern wird das hydraulische Aufbrechen eingesetzt, um Restmengen flüssiger und gasförmiger fossiler Rohstoffe zugänglich zu machen, deren Fördervolumen durch eine geringe Permeabilität des Reservoirgesteins abnimmt. In unkonventionellen Lagerstätten wird durch die Methode erst eine ausreichende Durchlässigkeit des Gesteins geschaffen, damit speziell Erdgas aus dem Reservoir freigesetzt und gefördert werden kann.

Beim hydraulischen Aufbrechen werden in der Regel Horizontalbohrungen innerhalb der Lagerstätten eingebracht. DieBohrung wird unter hohem Druck mit Fracfluid beschickt und dabei seismisch überwacht, um die Rissausbreitung über das Druckniveau steuern zu können.

Der hierbei im aufzubrechenden Bereich erreichte Druck muss die geringste im Gestein anliegende Spannung überschreiten. Wenn dies der Fall ist, drückt die Flüssigkeit das Gestein auseinander. Im Normalfall liegen die niedrigen Spannungsrichtungen in der Horizontalen, da der senkrechte lithostatische Druck (aus der Schwerkraft der auflagernden Gesteinsschichten) ohne weitere Einflüsse die Hauptspannung darstellt. So orientieren sich durch hydraulisches Aufbrechen entstehende Sprünge vorwiegend in etwa senkrecht stehenden Flächen - und folgende in wiederum auch zu diesen senkrecht stehenden Flächen.

Nach dem "Sprengen" dieser Risse wird die eingepresste, mit Sand oder Stützkörpern beladene Flüssigkeit so weit wie möglich zurückgepumpt. Die zugesetzten Festkörper verbleiben in den Rissen und haben die Aufgabe, diese gegen den anstehenden Gesteinsdruck offenzuhalten. Auch Reste des Fracfluids verbleiben durch Adhäsionswirkung an den Flüssig-fest-Phasengrenzen eher im Gestein.

Neben den Stützkörpern kann eine Vielzahl von Additiven in den Fracfluids enthalten sein, z.B.:
- Gele zur Eröhung der Viskosität des Fracfluids sowie zum besseren Sandtransport
- Schäume für den Transport und die Ablagerung des Sandes, beispielsweise Stickstoff oder Kohlendioxid
- Toninhibitoren zum Verhindern des Aufquellens von Ton in den Formationen, beispielsweise Kaliumchlord, Trimethlyammoniumchlorid oder Cholinchlorid
- Säuren für die Auflösung von Mineralien, beispielsweise Salzsäure, Essigsäure oder Ameisensäure
- Korrosionsschutzmittel für den Schutz der Anlagen, insbesondere bei Zugabe von Säuren
- Brecher zur Verringerung der Viskosität des Fracfluids zur besseren Rückholung der Fluide, beipsielsweise Säuren, Oxidationsmittel und/oder Enzyme
- Biozide zur Verhinderung von Bakterienwachstum an organischen Bestandteilen
- Fluid-Loss-Additive zur Verringerung des Ausflusses des Fracfluids in das umliegende Gestein, üblicherweise natürliche oder synthetische Polymere
- Reibungsverminderer zur Verringerung der Reibung innerhalb der Fluide, beispielsweise Latexpolymere oder Acrylamid-Copolymere
- pH-Puffer zur Stabilisierung des pH-Werts, beispielsweise Essigsäure-AcetatPuffer oder Borat-Puffer.

Als Gele in Fracfluids kommen erfindungsgemäß die unten beschriebenen Hydrogele zur Anwendung.

Zur Herstellung von Gelen zur Erhöhung der Viskosität werden vielfach Polysaccharide bzw. modifizierte Polysaccharide verwendet. Gängige Polymere auf Polysacccharidbasis sind Celluloseetherderivate oder Guar und seine Hydroxypropyl- oder Carboxymethyl-Derivate. Die Gele erhält man aus den Polymeren indem man die einzelnen Polymerketten untereinander vernetzt und auf diese Weise ein dreidimensionales Gel herstellt. Das Vernetzen solcher Polyscaccharide erfolgt typischerweise in alkalischem Milieu durch Zusatz von Borverbindungen.

Nachteile dieser Polymere auf Polysaccharidbasis sind:
- lange Hydrationszeiten
- begrenzte Temperaturstabilität bis nur etwa 110°C
- Abbau durch Mikroorganismen,was den Einsatz von Bioziden erforderlich macht
- Abbau der Polymerkette im Sauren.

Durch Derivatisierung z.B. Hydroxypropylierung oder Carboxymethylierung können speziell die Wasserlöslichkeit und die Temperaturstabilität erhöht werden. Diese Polymere sind bis etwa 135°C einsetzbar.

Da unkonventionelle Lagerstätten oft in größerer Tiefe liegen, ist auch diese verbesserte Temperaturstabilität von modifizierten Polysacchariden nicht ausreichend für einen Einsatz. Es besteht ein Bedarf an Polymeren, die auch bei Temperaturen über 200°C und darüber noch Hydrogele bilden, die ausreichend Viskosität und Elasitzität haben, um Stützkörper zu transportieren.

Die Gele müssen für einen effektiven Transport der Stützkörper strukturviskose Eigenschaften aufweisen. Bei einer erhöhten Scherung soll die Viskosität des Gels abnehmen. Damit ist sichergestellt, dass sich der erforderliche Pumpendruck beim Fördern des Fracfluids verringert. Bei geringer Scherung soll die Viskosität hoch sein.Damit ist sichergestellt, dass sich die Stützkörper in Zonen mit geringer Fließgeschwindigkeit oder bei Unterbrechung der Förderung nicht absetzen und die Bohrung verstopfen. Dieser Prozess muss reversibel sein.

Synthetische Polymere auf der Basis von Acrylamid und deren Hydrogele zeichnen sich in der Regel im Vergleich zu den unmodifizierten und modifizierten Polysacchariden und Guar-Derivaten durch eine deutlich verbesserte Temperaturstabilität aus.

Jedoch haben sich die aus diesen Polymeren gebildeten Hydrogele als empfindlich gegenüber salinen Wässern erwiesen. Durch Salz-Polymer-Wechselwirkung sinkt die Viskosität der Polymerlösungen, siehe z.B. Nasr-El-Din, H.A., Hawkins, B.F. and Green, K.A., 1991, Viscosity behavior of alkaline, surfactant, polyacrylamide solutions used for enhanced oil recovery, SPE 21028, Proc. Int. Symp. Oilfield Chem., Anaheim, CA, USA; K.C. Taylor, H.A. Nasr-El-Din, Journal of Petroleum Science and Engineering 19 (1998) 265-280; R.E. Bulo et al., "Site Binding" of Ca2+ Ions to Polyacrylates in Water: A Molecular Dynamic Study of Coiling and Aggregation, Macromolecules 2007, 40 3437-3442; T. Nylander et al., Formation of polyelectrolyte-surfactant complexes on surfaces, Advances in Colloid and Interface Science 2006, 123-126, 105-123; C.L. McCormick et al., Water-Soluble Copolymers, Macromolecules 1986, 19, 542-547.

Dieser Nachteil birgt ein erhebliches Anwendungsrisiko bei der Öl- und Gasförderung, da die Lagerstättenwässer praktisch immer einen gewissen Salzgehalt aufweisen, insbesondere einen hohen Gehalt an gelösten Alkali- und Erdalkalisalzen.

Wie oben bereits ausgeführt, sind Copolymere und darunter Acrylamid-Copolymerisate als Hilfsmittel bei der Erdöl- oder Erdgasförderung bekannt.

So beschreibt DE 10 2004 035 515 A1 bei Temperaturen von mehr als 150°C mit mehrwertigen Metallionen reversibel vernetzbare Copolymere zur Veränderung der

Permeabilität einer unterirdischen Formation für Wasser bzw. saline Wässer. Die Copolymeren werden durch radikalische Polymerisation von 80 bis 90 Gew. % einer ausgewählten ethylenisch ungesättigten Sulfonsäure, z.B. von AMPS, von 1 bis 10 Gew. % eines N-Vinylamids einer Carbonsäure, z.B. N-Vinylacetamid, von 1 bis 10 Gew % eines ausgewählten N-Vinyl-Stickstoff-Heterocyclus, z.B. N-Vinylpyrrolidon, und 0,1 bis 5 Gew. % einer Vinylphosphonsäure und gegebenenfalls bis zu 10 Gew. % eines Amids einer ethylenisch ungesättigten Carbonsäure, z.B. (Meth)acrylamid, erhalten. Die deutlich verbesserte Thermostabilität, die guten Gelbildungseigenschaften und die verbesserte Stabilität gegenüber salinen Wässern werden durch den Einsatz dieser Copolymeren mit Phosphonsäuregruppen, offenkettigen und insbesondere cyclischen Vinylamiden und nur einem geringen Gehalt an (Meth)acrylamiden zurückgeführt.

In der WO 03/033860 A2 wird ein Verfahren zur Verringerung oder zur vollständigen Einstellung von Wasserzuflüssen bei einer unterirdischen Formation zu einer Erdöl- oder Erdgasförderung beschrieben, indem die wässrige Lösung eines ausgewählten Copolymers zusammen oder danach mit einem Vernetzer in Form von ausgewählten Metallionen in die Bohrung eingebracht wird. Die Copolymeren werden durch radikalische Polymerisation von 40 bis 98 Gew. % einer ausgewählten ethylenisch ungesättigten Sulfonsäure, z.B. von AMPS, von 0,1 bis 58 Gew. % eines Acrylamids, 0,1 bis 10 Gew. % eines N-Vinylamids einer Carbonsäure, z.B. N-Vinylacetamid, oder eines N-Vinylpyrrolidons bzw. N-Vinylcaprolactams, und 0,1 bis 10 Gew. % einer Vinylphosphonsäure erhalten. Die hohe Adsorption an den Gesteinen der Lagerstätte, das elastische Dehn-Stauchverhalten und die besondere Stabilität gegenüber den Salzen in den Lagerstättenwässern sowie über einen breiten Temperaturbereich werden auf den Einsatz dieser Copolymeren zurückgeführt. Für die erhöhte Temperatur- und Gelstabilität wird insbesondere der hohe Anteil an Einheiten, die von Acrylamidoalkylensulfonsäure abgeleitet sind, verantwortlich gemacht.

Die EP 0 112 520 A2 beschreibt wasserlösliche Copolymerisate, deren Umsetzung mit mehrwertigen Metallionen und den Einsatz als Hilfsmittel in der Textilfärberei und als Nachgerbstoffe. Auch der Einsatz der Copolymerisate und deren Metallchelate als Verdicker von Säuren für die Erdöl- und Erdgasförderung werden erwähnt. Die Copolymeren werden durch radikalische Polymerisation von 1 bis 86 Gew. % einer Vinylphosphonsäure, 9 bis 80 Gew. % einer ausgewählten ethylenisch ungesättigten Sulfonsäure, z.B. von AMPS, von 5 bis 90 Gew. % eines (Meth)acrylamids, sowie gegebenenfalls von bis zu 30 Gew. % eines N-Vinylamids einer Carbonsäure, z.B. N-Vinylacetamid, eines Vinylphosphonsäureesters und/oder einer (Meth)acrylsäure in statistischer Verteilung der Monomereinheiten erhalten. Diese Copolymerisate können durch mehrwertige Metallionen und/oder durch Säuren vernetzt werden. Die Copolymerisate zeichen sich durch eine extrem hohe Viskosität selbst verdünnter wässriger Lösungen der Metallchelate aus.

Die US 6,986,391 B2 offenbart ein Verfahren zum Aufbrechen einer unterirdischen Erdöl- oder Erdgaslagerstätte. Dabei wird eine wässrige viskose Lösung durch eine Bohrung in die Lagerstätte gepumpt. In dieser Lösung ist ein Terpolymer enthalten, das sich ableitet von 55 bis 65 Gew. % AMPS, 34,5 bis 44,5 Gew. % Acrylamid, und 0,1 bis 1 Gew. % Acrylsäure, sowie ein Vernetzer für dieses Terpolymer und ein Additiv mit der Eigenschaft, eine verzögerte Erniedrigung der Viskosität zu bewirken. In alternativen Ausführungsformen wird ein Terpolymer eingesetzt, das sich ableitet von 15 bis 80 Gew. % AMPS, 20 bis 85 Gew. % Acrylamid, und bis zu 10 Gew. % Acrylsäure, bzw. das sich ableitet von AMPS, Acrylamid, und Acrylsäure.

Die US 2012/0101229 A1 offenbart modifizierte Acrylamid-Hydrogele, die zur sekundären und tertiären Gewinnung von Erdöl eingesetzt werden können. Dabei handelt es sich um salzresistente und Wasser absorbierende Verbindungen die durch Vernetzung eines Polyacrylamids und eines Di- oder Polysaccharids mit Vernetzungsmitteln, wie mit mehrwertigen Metallionen, erzeugt worden sind. Bei der Erzeugung der Hydrogele werden interpenetrierende Netzwerke ausgebildet. Als Polyacrylamide werden teilweise hydrolisierte Polyacrylamide genannt, die gegebenenfalls noch von anderen Copolymeren abgeleitete Struktureinheiten aufweisen können, beispielsweise von Monomeren mit Carboxyl-, Sulfonsäure-, Pyrrolidon- oder anderen hydrophoben Gruppen.

In der WO 01/49971 A1 wird ein Verfahren zum Behandeln einer Kohlenwasserstoffführenden Formation beschrieben, bei der neben einer Kohlenwasserstoff enthaltenden Zone auch wenigstens eine Wasser enthaltende Zone vorkommt. Das Verfahren beinhaltet das sequentielle Einbringen einer wässrigen Polymerlösung und einer wässrigen Vernetzerlösung gefolgt von einem weiteren Einbringen der wässrigen Polymerlösung, so dass sich ein kollabierbares Gel ausbildet, das den Kohlenwasserstofffluß fördert. Das Polymer enthält 0,01 bis 0,5 Gew. % an vernetzbaren Carboxylat- und/oder Phosphonatgruppen und weist ein Molekulargewicht von 250.000 bis 12.000.000 auf. Als Vernetzer werden bestimmte Zirkonium- bzw. Titansalze genannt. Spezifisch genannte Copolymere leiten sich von Vinylphosphonsäure und Acrylamid, von Vinylphosphonsäure und Methacrylamid, und von Vinylyphosphonsäure, Acrylamid und Methacrylamid ab bzw. es handelt sich um ausgewählte Pfropfpolymere auf der Basis von Poly(meth)-acrylamid, die mit Vinylphosphonsäure gepfropft sind.

Schließlich offenbart US 8,022,015 B2 ein Verfahren zum Aufbrechen einer unterirdischen Lagerstätte mit Temperaturen zwischen 149 und 260°C. Dabei wird eine wässrige Behandlungslösung durch eine Bohrung unter solchen Drucken in die Lagerstätte gepumpt, dass ein Aufbrechen der Lagerstätte erfolgt. In der Behandlungslösung ist ein Copolymer enthalten, das sich ableitet von AMPS, Acrylamid und Vinylphosphonsäure. Darüber hinaus enthält die Behandlungslösung mehrwertige Metallionen als Vernetzer, Phenothiazin oder Natriumthiosulfat und Phenothiazin als Stabilisatoren, und einen Puffer, welcher einen pH-Wert von 4,5 bis 5,25 aufrechterhält. Für das eingesetzte Copolymer wird der Anteil an Acrylamid mit 20 bis 90 Gew. %, der Anteil an AMPS mit 9 bis 80 Gew. % und der Anteil an Vinylphosphonsäure mit 0,1 bis 20 Gew. % angegeben. Über die Beständigkeit des vernetzten Polymers gegenüber salinen Wässern finden sich keine Angaben.

Es besteht nach wie vor ein Bedarf an Copolymeren, die sich in der Öl- und Gasförderung unkonventioneller oder weitgehend ausgeschöpfter Lagerstätten einsetzen lassen und deren Hydrogele eine hohe Beständigkeit gegenüber salinen Wässern aufweisen, die diesen Einsatz ausreichend temperaturstabil sind und die reversible, strukturviskose Eigenschaften aufweisen.

Überraschenderweise wurden jetzt Hydrogele gefunden, welche dieses Eigenschaftsprofil aufweisen.

Die vorliegende Erfindung, wie in den Ansprüchen angegeben, betrifft ein temperaturstabiles Hydrogel enthaltend elektrolythaltiges Wasser und ein mit mehrwertigen Metallionen vernetztes Copolymer, dadurch gekennzeichnet, dass
- das Copolymer mindestens Struktureinheiten enthält, die zu 0,005-20 Gew. % von einer ethylenisch ungesättigten Phosphonsäure sowie deren Alkalimetallsalze und/oder Ammoniumsalze, zu 5-40 Gew. % von einer ethylenisch ungesättigten Sulfonsäure sowie deren Alkalimetallsalze und/oder Ammoniumsalze und zu 5-94,995 Gew. % von einem Amid einer ethylenisch ungesättigten Carbonsäure ausgewählt aus der Gruppe Acrylamid, Methacrylamid und/oder deren C₁-C₄-Alkylderivate abgeleitet sind, wobei sich die Prozentangaben auf die Gesamtmasse der bei der Copolymerisation eingesetzten Monomeren beziehen,
- die mehrwertigen Metallionen für die Vernetzung der Polymere den Gruppen IIIA, IVB, VB, VIB, VIIB und/oder VIIIB des Periodensystems der Elemente angehören, und
- der Gehalt an Elektrolyt im Hydrogel zwischen 0,075 und 25 Gew. %, bezogen auf die Gesamtmasse des Hydrogels beträgt, und
der Elektrolyt Alkali-metallhalogenide und/oder Erdalkalimetallhalogenide sowie Salze von organischen Aminen umfasst.

Das erfindungsgemäße temperaturstabile Hydrogel lässt sich typischerweise bei Temperaturen bis zu 250°C einsetzen. Das bedeutet, dass das Hydrogel bei Temperaturen bis zu 250°C noch Gelcharakter aufweist bzw. dass dessen Viskosität noch ausreichend hoch ist, um einen Einsatz als Fracfluid zu gewährleisten bzw. dass bei Temperaturen bis zu 250°C noch kein nennenswerter Abbau des Hydrogels eingesetzt hat.

Elektrolyte im Sinne der vorliegenden Erfindung sind chemische Verbindung, die im gelösten Zustand (in Wasser) zumindest teilweise oder gänzlich in Ionen dissoziieren und die sich unter dem Einfluss eines elektrischen Feldes gerichtet bewegen. Elektrolyte die vollständig dissoziiert in Ionen vorliegen, werden als starke Elektrolyte bezeichnet; Elektrolyte die nur zum Teil dissoziiert in Ionen vorliegen, werden als schwache Elektrolyte bezeichnet.

Bei den im erfindungsgemäßen Hydrogel vorliegenden Elektrolyten handelt sich um Salze der der I. Hauptgruppe und/oder der II. Hauptgruppe sowie ggf. der III. Hauptgruppe der Element im Periodenystem. Bevorzugt handelt es sich bei diesen Salzen um Hydroxide, Sulfide, Sulfite, Sulfate, Carbonate, Hydrogencarbonate, Nitrate, Phosphate und Halogenide, insbesondere Chloride und/oder Bromide. Bevorzugt sind Natriumchlorid, Kaliumchlorid, Magnesiumchlorid und/oder Calciumchlorid.

Darüber hinaus können die Elektrolyte im erfindungsgemäßen Hydrogel als Salze von organischen Aminen vorliegen, bevorzugt als Hydrochloride von Alkyaminen und Hydroxylalkylaminen, besonders bevorzugt Trimethylammoniumchlorid und Cholinchlorid.

Die Elektrolyte, die im erfindungsgemäßen Hydrogel enthalten sind, können aus verwendetem Seewasser, Formationswasser und/oder aus Salzlösungen stammen, die einem Fracfluid zugesetzt werden, um das Quellen von Tonen zu verhindern.

Der Elektrolytgehalt des erfindungsgemäßen Hydrogels beträgt zwischen 0,075 und 25 Gew. %, vorzugsweise zwischen 0,1 und 15 Gew. %, ganz bevorzugt zwischen 0,1 und 10 Gew. %, bezogen auf die Gesamtmasse des Hydrogels.

Bei der Bestimmung des Elektrolytgehaltes werden die im erfindungsgemäßen temperaturstabilen Hydrogel vorliegenden Copolymere enthaltend Struktureinheiten, die sich von 0,005-20 Gew. % von einer ethylenisch ungesättigten Phosphonsäure sowie deren Alkalimetallsalze und/oder Ammoniumsalze, von 5-40 Gew. % von einer ethylenisch ungesättigten Sulfonsäure sowie deren Alkalimetallsalze und/oder Ammoniumsalze und von 5-94,995 Gew. % von einem Amid einer ethylenisch ungesättigten Carbonsäure ausgewählt aus der Gruppe Acrylamid, Methacrylamid und/oder deren C₁-C₄-Alkylderivate ableiten, wobei sich die Prozentangaben auf die Gesamtmasse der bei der Copolymerisation eingesetzten Monomeren beziehen, sowie die mehrwertigen Metallionen der Gruppen IIIA, IVB, VB, VIB, VIIB und/oder VIIIB des Periodensystems der Elemente mengenmäßig nicht miteinbezogen.

Bei dem erfindungsgemäß eingesetzten Copolymer handelt es sich um ein Copolymer, das zumindest von ethylenisch ungesättigten Phosphonsäure(n), von ethylenisch ungesättigten Carbonsäureamid(en) und von ethylenisch ungesättigten Sulfonsäure(n) und/oder deren Alkalimetallsalzen und/oder deren Ammoniumsalzen abgeleitete Struktureinheiten sowie gegebenenfalls von weiteren damit copolymerisierbaren Monomeren abgeleitete Struktureinheiten aufweist.

Bevorzugt eingesetzt werden Copolymere, die Struktureinheiten aufweisen, welche sich von Vinylphosphonsäure und/oder deren Alkalimetallsalzen und/oder deren Ammoniumsalzen und/oder von Allylphosphonsäure und/oder deren Alkalimetallsalzen und/oder deren Ammoniumsalzen ableiten, wobei diese mit Amiden eingesetzt werden, die Struktureinheiten aufweisen, welche sich von Acrylamid, Methacrylamid, sowie deren N-C₁-C₄-Alkyl-Derivaten, vorzugsweise von Acrylamid und/oder Methacrylamid ableiten.

Ebenfalls bevorzugt eingesetzt werden Copolymere, die Struktureinheiten aufweisen, welche sich von Vinylsulfonsäure, 2-Acrylamido-2-methylpropansulfonsäure, 2-Methacrylamido-2-methylpropansulfonsäure, Styrolsulfonsäure, und/oder deren Alkalimetallsalzen und/oder deren Ammoniumsalzen, vorzugsweise von 2-Acrylamido-2-methylpropansulfonsäure und/oder 2-Methacrylamido-2-methylpropansulfonsäure, ableiten.

Bei den weiteren mit Carbonsäureamiden und mit ethylenisch ungesättigten Sulfonsäuren und/oder deren Alkalimetallsalzen und/oder deren Ammoniumsalzen copolymerisierbaren Monomeren handelt es sich um ethylenisch ungesättigte Carbonsäuren und/oder um zusätzliche damit copolymerisierbare Monomere. Letztere werden insbesondere ausgewählt aus der Gruppe der Alkylester von ethylenisch ungesättigten Carbonsäuren, der Oxyalkylester von ethylenisch ungesättigten Carbonsäuren, der Ester von ethylenisch ungesättigten Carbonsäuren mit N, N-Dialkylalkanolaminen und/oder der N-Vinylamide.

Bei den ethylenisch ungesättigten Carbonsäuren handelt es sich vorzugsweise um Acrylsäure, Methacrylsäure, Fumarsäure, Maleinsäure, Itaconsäure und/oder Crotonsäure sowie deren Alkalimetallsalze und/oder deren Ammoniumsalze. Bei dem Alkylester von ethylenisch ungesättigten Carbonsäuren handelt es sich vorzugsweise um einen Alkylester der Acrylsäure, der Methacrylsäure, der Fumarsäure, der Maleinsäure, der Itaconsäure oder der Crotonsäure ist, ganz besonders bevorzugt um einen Alkylester mit 1-8 C-Atomen.

Bei dem Oxyalkylester von ethylenisch ungesättigten Carbonsäuren handelt es sich vorzugsweise um einen 2-Hydroxyethylester der Acrylsäure, der Methacrylsäure, der Fumarsäure, der Maleinsäure, der Itaconsäure oder der Crotonsäure.

Bei dem Ester von ethylenisch ungesättigten Carbonsäuren mit N, N-Dialkylalkanolaminen handelt es sich vorzugsweise um N,N-Dimethylethanolaminmethacrylat, dessen Salze oder quaternären Produkte.

Bei dem N-Vinylamid handelt es sich vorzugsweise um N-Vinylformamid, N-Vinylacetamid, N-Vinyl-N-methylacetamid oder um cyclische N-Vinylamid-Verbindungen, bevorzugt um N-Vinylpyrrolidon, N-Vinylcaprolactam oder N-Vinylpyridin.

Die erfindungsgemäß eingesetzten Copolymere zeichnen sich dadurch aus, dass sie durch Vernetzung mit mehrwertigen Metallionen Hydrogele ausbilden, die in Gegenwart von salinen Wässern bzw. anderen salzhaltigen Umgebungen auch bei hohen Temperaturen die für den Einsatz in Fracfluiden erforderlichen Eigenschaften, wie Elastitzät, Viskosität und Strukturviskosität aufweisen.

Diese Eigenschaft zeichnet die erfindungsgemäßen Hydrogele gegenüber Hydrogelen aus, die sich von anderen synthetischen Copolymeren ableiten, die durchaus strukturverwandt sein können.

Das hat zur Folge, dass die erfindungsgemäßen Hydrogele unter Anwendungsbedingungen in der Lagerstätte unter salinenBedingungen bei erhöhten Temperaturen eine ausgeprägte Stabilität zeigen, während Hydrogele aus anderen Polymeren nicht einsetzbar sind, da sie unter diesen Bedingungen denaturieren und ihre Viskosität einbüßen bzw. sich tragfähige Hydroghele gar nicht erst ausbilden. Es wird angenommen, dass die Phosphonsäureeinheiten für die relativ hohe Stabilität der Vernetzung mit Metallionen verantwortlich sind.

Der Anteil an Struktureinheiten abgeleitet von einer ethylenisch ungesättigten Phosphonsäure im erfindungsgemäß eingesetzten Copolymer beträgt üblicherweise von 0,005 bis 20 Gew. %, insbesondere von 0,05 bis 5 Gew. %, bezogen auf die Gesamtmenge der bei der Copolymerisation eingesetzten Monomeren.

Der Anteil an Struktureinheiten abgeleitet von einem Amid einer ethylenisch ungesättigten Carbonsäure ausgewählt aus der Gruppe Acrylamid, Methacrylamid und/oder deren C₁-C₄-Alkylderivate im erfindungsgemäß eingesetzten Copolymer beträgt üblicherweise von 5 bis 94,995 Gew. %, insbesondere von 10 bis 50 Gew. %, bezogen auf die Gesamtmenge der bei der Copolymerisation eingesetzten Monomeren.

Der Anteil an Struktureinheiten abgeleitet von einer ethylenisch ungesättigten Sulfonsäure im erfindungsgemäß eingesetzten Copolymer beträgt üblicherweise von 5 bis 40 Gew. %, insbesondere von 10 bis 30 Gew. %, bezogen auf die Gesamtmenge der bei der Copolymerisation eingesetzten Monomeren.

Der Anteil an Struktureinheiten abgeleitet von sonstigen Comonomeren also von anderen Comonomeren als einer ethylenisch ungesättigten Phosphonsäure, einem Amid einer ethylenisch ungesättigten Carbonsäure und einer ethylenisch ungesättigten Sulfonsäure im erfindungsgemäß eingesetzten Copolymer beträgt üblicherweise nicht mehr als 20 Gew. %, insbesondere nicht mehr als 15 Gew. %, bezogen auf die Gesamtmenge der bei der Copolymerisation eingesetzten Monomeren.

Die Copolymere, die in der Erfindung benutzt wurden, können durch unterschiedliche radikalische Polymerisationsverfahren, z.B. Lösungspolymerisation, Gelpolymerisation und insbesondere inverse Emulsionspolymerisation, synthetisiert werden. Der Vorteil der inversen Emulsionspolymerisation ist das hohe Molekulargewicht des erhaltenen Copolymers. Des Weiteren kann das Copolymer, das in der inversen Emulsion vorhanden ist, sehr schnell hydratisiert werden. Ein weiterer Vorteil ist die Handhabung einer Flüssigkeit mit einem hohen Copolymer-Gehalt, die einfacher ist als die Handhabung wässriger Lösungen mit geringem Copolymer-Gehalt oder die Handhabung von Nassgelen aus der Gelpolymerisation oder die Handhabung von feinem Pulver, das von getrocknetem Copolymer aus der Gelpolymerisation erlangt wurde. Gemäß der Erfindung wird das erfindungsgemäße Polymer vorzugsweise durch inverse Emulsionspolymerisation synthetisiert.

Die polymerisierbaren Monomere können normalerweise in handelsüblicher Qualität, also ohne weitere Reinigung, benutzt werden. Die Copolymere, die in der Erfindung benutzt wurden, werden in einer per se bekannten Prozedur, z.B. Gelpolymerisation, Lösungspolymerisation und vorzugsweise inverse Emulsionspolymerisation, derartig synthetisiert, dass die Monomere, die polymerisiert werden sollen, einer radikalischen Copolymerisation ausgesetzt sind.

Im Rahmen der Beschreibung, bedeutet radikalische Polymerisation, dass mindestens drei Monomere, die imstande sind, Struktureinheiten der Formeln (I), (II) und (III), optional (IV) und/oder (V), zu bilden, und die im Rahmen einer radikalischen Copolymerisation miteinander radikalisch polymerisiert werden können, vorhanden sind. Somit werden Copolymere mit statistischer und alternierender Verteilung der Struktureinheiten, abgeleitet von den mindestens drei Monomeren, oder Blockcopolymere, bei denen Blöcke aus bestimmten Monomeren aufgebaut und kovalent miteinander verbunden werden, gewonnen.

Der Vorgang der inversen Emulsionspolymerisation ist an sich bekannt. Bei diesem bevorzugten Polymerisationsverfahren wird zuerst eine wässrige oder wassermischbare hydrophile Phase, die die Monomere umfasst, fein in einer nicht-wassermischbaren organischen Phase verteilt, die Wasser-in-ÖI-Emulgatoren enthält, und dann wird die Polymerisation, z.B. durch Radikale bildende Initiatoren, gestartet.

Die Comonomere, die polymerisiert werden sollen, werden vorteilhaft anschließend in der hydrophilen Phase gelöst. Gegebenenfalls können feste Monomere in flüssigen Monomeren gelöst werden. Die Comonomere können die hydrophile Phase allein bilden und als solche in der nicht-wassermischbaren organischen Phase emulgiert sein, oder vorzugsweise sind die Comonomere in Wasser gelöst und als wässrige Lösung emulgiert. Wasserunlösliche oder schwer lösliche Monomere sind normalerweise in der hydrophoben Flüssigkeit vor dem Zugeben der wässrigen Lösung gelöst. Im Rahmen der Beschreibung bedeutet "wasserlöslich", dass 1 g der Substanz in 1 Liter Wasser bei 25 °C löslich ist.

Bezogen auf die Gesamtmasse der hydrophilen Phase, enthält die hydrophile Phase von 10 bis 100 Gew.% Comonomere und von 0 bis 90 Gew.% Wasser. Der bevorzugte Prozess der inversen Emulsionspolymerisation wird typischerweise in einer 20 bis 60 Gew.% wässrigen Lösung aus Monomeren (in Bezug auf die Gesamtmasse der wässrigen Phase) durchgeführt.

Als hydrophobe Flüssigkeit wird eine wasserunlösliche, inerte Flüssigkeit benutzt. Solche Flüssigkeiten sind z.B. organische Lösemittel, vorzugsweise Kohlenwasserstoffe, wie z.B. Cyclohexan, n-Pentan, n-Hexan, n-Heptan, i-Oktan, technische Mischungen aus Kohlenwasserstoffen, Toluol, Xylol, halogenierten Kohlenwasserstoffen, wie z.B. Chlorbenzol, o-Dichlorbenzol. Auch Mischungen aus unterschiedlichen organischen Lösemitteln sind anwendbar.

Um die Monomerphase in der nicht-wassermischbaren organischen Phase zu einer Wasser-in-ÖI-Emulsion zu emulgieren, wird typischerweise ein lipophiles Tensid, das die fein verteilte wässrige Schicht vor der Koaleszenz bewahrt, in der gebrauchten hydrophoben Flüssigkeit gelöst. Geeignete lipophile Tenside sind organische Substanzen mit einem niedrigen HLB-Wert, wie z.B. Sorbitanester, Sorbitanoleate oder Sorbitanstearate, oder ethoxylierte Fettamide, Glycerin-Fettsäureester wie Glycerinoleat oder Diacetylweinsäureester von Fettsäureglyceriden, Polysiloxane oder Polyalkylenglykolen. Der HLB-Wert beschreibt die hydrophil-lipophile Balance eines Tensids und ist ein Maß für dessen hydrophilen oder lipophilen Anteil, der durch Berechnen der Werte für die verschiedenen Bereiche des Moleküls bestimmt wird. Es gibt unterschiedliche Methoden zum Errechnen des HLB-Wertes. Die gängigste ist die Einstufung der Tenside zwischen 0 und 20, wobei 0 für ein vollständig lipophiles/hydrophobes Molekül steht, und ein Wert von 20 einem vollständig hydrophilen/lipophoben Molekül entspricht. Typischerweise spezifiziert der Anbieter den HLB-Wert des Tensids. Im bevorzugten Prozess der inversen Emulsionspolymerisation liegt der HLB-Wert der lipophilen Tenside unter 10.

Das lipophile Tensid oder eine Mischung unterschiedlicher lipophiler Tenside wird, bezogen auf die Gesamtmasse der Formulierung, typischerweise in Mengen von 0,05 bis 15 Gew.%, vorzugsweise 0,1 bis 10 Gew.% benutzt.

Die Volumina der hydrophilen und hydrophoben Phasen haben typischerweise ein Verhältnis von 0,5 bis 10:1.

Die Dispersion der Lösung, die hydrophile Comonomere enthält, im lipophilen Tensid, das hydrophobe Lösung enthält, wird auf konventionelle Weise durchgeführt, vorzugsweise durch kräftiges Rühren. Es ist vorteilhaft, die Copolymerisation unter Ausschluss von Sauerstoff durchzuführen. Das wird gewährleistet, indem Inertgas, z.B. Stickstoff, durch das Reaktionsgemisch geleitet wird.

Die Copolymerisation wird auf eine an sich bekannte Weise gestartet, z.B. UV-Licht, energiereiche Strahlung, typischerweise durch das Hinzugeben einer Mischung aus löslichen, Radikale produzierenden Initiatoren zur Wasser-in-ÖI-Emulsion. Geeignete Initiatoren sind organische oder anorganische Per- und AzoVerbindungen, z.B. Benzoylperoxid, tert-Butylhydroperoxid, Cymolperoxid, Methylethylketonperoxid, Lauroylperoxid, tert-Butylperbenzoat, tert-Butyldiperphthalat, Azodiisobutyronitril, 2,2'-Azo-bis(2,3-Dimethylvaleronitril), 2-Phenyl-Azo-2,4-Dimethyl-4-Methoxyvaleronitril, 2-Cyano-2-Propylazoformamid, Azodiisobutyramid, Dimethyl-, Diethyl- oder Dibutyl-Azobismethylvalerat, Kaliumpersulfat, Ammoniumpersulfat, Wasserstoffperoxid.

In Bezug auf die Gesamtmasse der Monomere werden vorzugsweise Initiatoren von 0,001 bis 2 Gew.%, insbesondere 0,01 bis 0,1 Gew.% benutzt. Der Radikale bildende Initiator oder die Mischung aus unterschiedlichen Radikale bildenden Initiatoren kann der hydrophilen und/oder hydrophoben Phase der Emulsion hinzugefügt werden.

Die Polymerisationsreaktion wird in einem Temperaturbereich von -20 °C bis 200 °C, vorzugsweise von 10 °C bis 90 °C durchgeführt. Der angewandte Druck ist normalerweise Atmosphärendruck, wenn der Siedepunkt entweder von der wässrigen Phase oder der organischen Phase nicht bei der gewählten Temperatur erreicht wird. Ist der Siedepunkt entweder von der hydrophilen Phase oder der organischen Phase höher als die Polymerisationstemperatur, wird ein erhöhter Druck angewendet, um ein Sieden zu vermeiden. In jedem Fall kann die Polymerisation unter erhöhtem Druck durchgeführt werden, falls dies gewünscht ist.

Die Copolymerisation ist normalerweise nach 0,3 bis 3 h abgeschlossen. Nach Beendigung der Copolymerisation liegt das Copolymer als Dispersion in einer Wasser-in-ÖI-Phase vor.

Die fertige Wasser-in-ÖI-Dispersion besteht typischerweise aus 20 bis 90 Gew.% wässriger Phase, bezogen auf die Gesamtmasse der Formulierung. Die wässrige Phase enthält im Grunde das vollständige Copolymer und hat typischerweise eine Konzentration im Bereich von 20 bis 60 Gew.%, bezogen auf die Gesamtmasse der wässrigen Schicht. Die kontinuierliche hydrophobe Phase der Wasser-in-ÖI-Polymerdispersion, nämlich die flüssige Kohlenwasserstofflösung und die lipophilen Tenside, sind typischerweise im Bereich von 10 bis 80 Gew.%, in Bezug auf die Gesamtmasse der Formulierung, vorhanden.

Für die Anwendung als Geliermittel für Fracfluide müssen die Copolymere der inversen Copolymeremulsion von den Mizellen im Anwendungsfluid befreit sein. Dies geschieht durch die Zerstörung der Mizellen, nachdem die inverse Copolymeremulsion in Wasser oder wässrige Elektrolytlösung dosiert wurde und entweder genügend mechanische Energie durch Rühren angewendet oder ein geeignetes Tensid mit einem HLB>10 zum Verdünnungswasser oder der wässrigen Elektrolytlösung hinzugefügt wird. Dieser Vorgang heißt Inversion. In Gegenwart eines geeigneten Tensids, ist die Inversion innerhalb einer sehr kurzen Zeitspanne, z.B. einigen Sekunden, abgeschlossen, ohne Agglomerate aufzubauen. Das Tensid mit einem HLB>10 kann der inversen Copolymeremulsion auch direkt zugeführt werden.

Die Copolymerisation kann auch als Gelpolymerisation durchgeführt werden. Mit diesem Verfahren werden typischerweise 5 bis 60 Gew.% Monomere (bezogen auf die Gesamtmasse der Mischung) in Wasser oder einer Lösungsmittelmischung aus Wasser und einem anderen vollständig wassermischbaren Lösungsmittel, z.B. Alkohol, unter Verwendung des bekannten geeigneten Katalysatorsystems ohne mechanisches Mischen der Lösung unter Verwendung des Trommsdorff-Norrish-Effektes, polymerisiert (Makromol. Chem. 1947, 1, 169).

Die Gelpolymerisation wird vorteilhaft unter Ausschluss von Sauerstoff, z.B. in einer Inertgasatmosphäre mit Stickstoff, bei Temperaturen von -20 °C bis 200 °C, vorzugsweise von 10 °C bis 90 °C, durchgeführt. Der angewandte Druck ist typischerweise Atmosphärendruck, sollte die Siedetemperatur der Mischung nicht bei der gewählten Temperatur erreicht werden. In jedem Fall kann die Polymerisation unter erhöhtem Druck durchgeführt werden, falls dies gewünscht ist.

Die Copolymerisation kann durch energiereiche Strahlung oder typischerweise durch das Hinzugeben einer Mischung löslicher, Radikale produzierender Initiatoren in Gang gesetzt werden, beispielsweise organische oder anorganische Per- und Azoverbindungen, z.B. Benzoylperoxid, tert-Butylhydroperoxid, Cymolperoxid, Methylethylketonperoxid, Lauroylperoxid, tert-Butylperbenzoat, tert-Butyldiperphthalat, Azodiisobutyronitril, 2,2'-Azo-bis(2,3-Dimethylvaleronitril), 2-Phenyl-Azo-2,4-Dimethyl-4-Methoxyvaleronitril, 2-Cyano-2-Propylazoformamid, Azodiisobutyramid, Dimethyl-, Diethyl- oder Dibutyl-Azobismethylvalerat, Kaliumpersulfat, Ammoniumpersulfat, Wasserstoffperoxid, wenn geeignet in Kombination mit Reduktionsmitteln, z.B. Natriumhydrogensulfit und Eisen-II-Sulfat, oder Redoxsysteme, die beispielsweise Sulfinsäure als reduzierende Verbindung haben. In der Regel werden 0,001 bis 2 g des Polymerisationsinitiators pro 100 g Monomere benutzt.

Die Copolymere, die im Verfahren dieser Erfindung benutzt wurden, liegen in Form einer wässrigen, gallertartigen Masse vor und können mechanisch zerkleinert und getrocknet und somit in fester Form bezogen werden. Vorzugsweise wird die wässrige gallertartige Masse direkt appliziert und in Wasser oder wässrige Elektrolytlösung zur Verdünnung gegeben. Diese Copolymere lösen sich nur sehr langsam. Je höher der Polymergehalt des beigemengten Pulvers, Gels oder der eingemischten Lösung, desto länger dauert die vollständige Auflösung.
Es ist ein deutlicher Anwendungsvorteil, wenn die Verdünnung in kurzer Zeitdauer vonstatten geht und wenn homogene Polymerlösungen erhalten werden können. Besonders bevorzugt werden daher Hydrogele, die von synthetischen Copolymeren stammen, welche durch inverse Emulsionspolymerisation synthetisiert werden.

Je niedriger der Elektrolytgehalt einer Lösung ist, umso schneller lösen sich in der Regel die Copolymere darin. Daher kann es empfehlenswert sein, die Copolymere zunächst in höherer Konzentration als der angestrebten Konzentration in entsalztem Wasser oder in einer Elektrolytlösung mit niedrigem Elektrolytgehalt zu lösen und diese Lösung dann anschließend mit einer Elektrolytlösung mit höherem Elektrolytgehalt so zu verdünnen, so dass die gewünschte Elektrolyt- und Polymerkonzentration erreicht wird.

Die mittleren Molekulargewichte der erfindungsgemäß eingesetzten Copolymeren können in weiten Bereichen schwanken. Hydrogele, die von synthetischen Copolymeren mit einem hohen Molekulargewicht abgeleitet sind, werden bevorzugt.

Die mittleren Molekulargewichte können mittels Gelpermationschromatographie (GPC) bestimmt werden. Dabei können als Standard kommerziell erhältliche Polymere z.B. aus Acrylamid mit Molekulargewichten von 1.140.000 Dalton und 5.550.000 Dalton verwendet werden. Als Trennmedium kann eine Säule bestehend aus einem Polyhydroxymethacrylat Copolymer Netzwerk mit einem Porendurchmesser von 30.000 Å verwendet werden. Typischerweise liegen die gewichtsmittleren Molekulargewichte der erfindungsgemäß eingesetzten Copolymere zwischen 10.000 und 25.000.000 Dalton (g/mol), vorzugsweise zwischen 1.000.000 und 10.000.000 Dalton.

Besonders bevorzugt werden zur Herstellung der erfindungsgemäßen Hydrogele Polymerlösungen eingesetzt, die Copolymere mit einem gewichtsmittleren Molekulargewicht von mindestens 1 Mio Dalton enthalten.

Das erfindungsgemäße elektrolythaltige Hydrogel weist in der Regel eine Konzentration des Copolymeren von 0,01 bis 10 Gew.-%, bevorzugt eine Konzentration von 0,1 bis 2,5 Gew-% und besonders bevorzugt eine Konzentration von 0,2 bis 1,5 Gew-%, jeweils bezogen auf die Gesamtmenge des Hydrogels, auf.

Das erfindungsgemäße Hydrogel kann durch Vernetzung mit den oben genannten mehrwertigen Metallkationen vernetzt werden. Es können beliebige wasserlösliche Salze dieser Metallkationen eingesetzt werden, beispielsweise Hydroxide, Sulfate oder insbesondere Halogenide, wie Chloride. Weitere geeignete Anionen sind organische Anionen und/oder deren Kombinationen, wie z.B. Lactate, Zitrate, Gluconate oder Tartrate. Ebenfalls geeignet sind Kompolexe dieser Metallkationen mit organischen O- und/oder N-Verbindungen, wie z.B. Alkohole, Carbonsäuren, Dicarbonsäuren, Aminen, Diaminen oder Hydroxyalkylaminen, auch in Kombination mit organischen oder anorganischen Anionen. Salze und/oder Komplexe der Metallkationen können in Wasser und/oder in einem mit Wasser mischbaren Lösemittel vorliegen.

Besonders bevorzugt werden mehrwertige Kationen der Gruppen IIIA, IVB, VB, VIB, VIIB und/oder VIIIB des Periodensystems der Elemente eingesetzt, die ausgewählt werden aus der Gruppe der Kationen des Zirconiums, Aluminiums, Bors, Titans, Chroms und/oder des Eisens. Besonders bevorzugt sind Verbindungen des Zirkoniums und/oder desTitans. Insbesondere bevorzugt sind Zirkoniumsalze und/oder seine Komplexe.

Zur Herstellung der Hydrogele werden die mehrwertigen Metallkationen in Form ihrer Salze oder Komplexe idealerweise gelöst in Wasser oder in einem mit Wasser mischbaren Lösungsmittel unter Rühren der elektrolythaltigen Copolymerlösung zugegeben, um eine homogene Verteilung der Metallkationen in der Lösung zu gewährleisten. Das dreidimensionale Polymernetzwerk bildet sich aus und die ursprüngliche Lösung verdickt sich zum Gel. Die Hydrogelbildung kann gegebenenfalls beschleunigt werden durch Anpassung der Rührgeschwindigkeit, des pH-Wertes und/oder durch Temperaturerhöhung.

Die Konzentration der Metallkationen zur Vernetzung in mol wird bezogen auf den Anteil an Monomeren mit sauren Gruppen, die bei der Copolymerisation eingesetzt werden, wobei aus der Monomerzusammensetzung die Stoffmenge an sauren Gruppen enthaltenden Monomeren in mol berechnet wird.

In der Regel werden zwischen 10⁻⁵ und 100 mol/mol Metallkationen pro mol Monomer mit saurer Gruppe, bevorzugt zwischen 10⁻³ und 2 mol/mol, ganz bevorzugt zwischen 0,01 und 1 mol/mol Metallkationen pro mol Monomer mit saurer Gruppe eingesetzt.

Das erfindungsgemäße Hydrogel zeichnet sich durch eine sehr gute Beständigkeit gegenüber salinen Wässern insbesondere bei erhöhten Temperaturen aus. Das bedeutet, dass das Hydrogel im Sedimentgestein keinen nennenswerten Abbau erleidet und ein durch das Einbringen des mit Sand beladenen Hydrogels aufgebauter Druck auf das Sedimentgestein lange erhalten bleibt. Für die Zwecke dieser Beschreibung wird die Beständigkeit gegenüber salinen Wässern wie folgt charakterisiert:
Das präparierte Hydrogel wird auf die gewünschte Temperatur erhitzt und seine Viskosität bei der jeweiligenTemperatur bei einer definierten Scherrate oder ggf. unter Variation der Scherrate rheometrisch verfolgt. Bei erhöhten Temperaturen wird durch Beaufschlagung des Hydrogels mit Stickstoffdruck sichergestellt, dass keine Siedeprozesse ablaufen. Die Änderung der Gelviskostät in Abängigkeit von der Zeit und ggf. von der Scherrate wird verfolgt und beurteilt.

Gelcharakter im Sinne der vorliegenden Erfindung liegt dann vor, wenn die Viskosität nach der Vernetzung wesentlich höher ist als vor der Vernetzung. Die erfindungsgemäßen Hydrogele zeichnen sich dadurch aus, dass sie auch bei hohen Temperaturen bis 250 °C stabile Netzwerke bilden, deren Viskosität wesentlich höher ist als die der unvernetzten Coolymerlösung. Wesentlich bedeutet in diesem Zusammenhang, dass die Viskosität des Gels bei gleicher Scherrate, Druck und Temperatur um min. 100% höher liegt, bevorzugt um min. 400% höher liegt.

Die Erfindung betrifft insbesondere ein Verfahren zum hydraulischen Aufbrechen von Lagerstättengestein, um dessen Permeabilität für die Förderung von Erdöl und/oder Ergdas zu erhöhen, wobei das oben beschriebene elektrolythaltige Hydrogel als Verdickungsmittel dient und einen effektiven Transport von Stützkörpern in die erzeugten Gesteinsrisse sicherstelt.

Ein bevorzugtes Verfahren ist dadurch gekennzeichnet, dass zur Herstellung des Hydrogels eine Lösung des Copolymeren in einer Elektrolytlösung hergestellt wird, entweder durch Einrühren der wässrigen Gallerten oder Lösungen aus der Gel- und Lösungspolymerisation oder durch Invertieren der inversen Polymeremulsion, dieser elektrolythaltigen Copolymerlösung vor dem Einbringen in die Lagerstätte eine Lösung eines Salzes enthaltend ein mehrwertiges Kation der Gruppen IIIA, IVB, VB, VIB, VIIB und/oder VIIIB des Periodensystems der Elemente und gegebenenfalls ein Puffer zugesetzt wird, so dass das Copolymer ein dreidimensionales Netzwerk ausbildet, dass zu dieser Lösung gegebenenfalls weitere Additive und Stützkörper hinzugefügt werden und sie dann in die Lagerstätte eingepresst wird.

Ein weiteres bevorzugtes Verfahren ist dadurch gekennzeichnet, dass zur Herstellung des Hydrogels eine Lösung der Copolymere zunächst in höherer Konzentration als der angestrebten Konzentration in entsalztem Wasser oder in einer Elektrolytlösung mit niedrigem Elektrolytgehalt zu lösen und diese Lösung dann anschließend mit einer Elektrolytlösung mit höherem Elektrolytgehalt so zu verdünnen, so dass die gewünschte Elektrolyt- und Polymerkonzentration erreicht wird.

Ganz besonders bevorzugt ist ein Verfahren, bei dem als Elektrolytlösung zur Herstellung der Copolymerlösung auschließlich oder teilweise salines Wasser, wie Seewasser oder Formationswasser, verwedet wird. Dieses ist besonders von Vorteil, da in trockenen Gebieten oder im Off-Shore-Bereich Frischwasser häufig nicht oder nicht in ausreichenden Mengen vorhanden ist und zur Herstellung der Hydrogele Seewasser oder Formationswasser aufbereitet werden muss.

Die nachstehenden Beispiele erläutern die Erfindung ohne diese einzuschränken.

### Beispiele 1-4: Polymerisation in inverser Emulsion

### Beispiel 1: Herstellung von Polymer 1

In160 g C₁₁-C₁₆-Isoparaffin wurden 37 g Sorbitanmonooleat gelöst. In einem Becherglas wurden 100 g Wasser vorgelegt, auf 5 °C gekühlt, und 50 g 2-Acrylamido-2-methylpropansulfonsäure und 10 g Vinylphosponsäure zugegeben. Mittels wässriger Ammoniaklösung (25%) wurde der pH-Wert auf 7,1 eingestellt. Anschließend wurden 223 g Acrylamidlösung (60%ige Lösung in Wasser) zugegeben.

Die wässrige Monomerlösung wurde unter starkem Rühren in die Lösung aus C₁₁-C₁₆-Isoparaffin und Sorbitanmonooleat gegeben. Es wurde für 45 Min mit Stickstoff inertisiert.

Zum Starten wurden 0,5 g Azoisobutyronitril in 12 g C₁₁-C₁₆-Isoparaffin gelöst und zu der Reaktionsmischung gegeben. Die Lösung wurde dann auf 50 °C angeheizt.

Sobald die Maximaltemperatur erreicht war, wurde mittels Ölbad für 2 h auf 80 °C erhitzt. Die Suspension wurde auf Raumtemperatur abgekühlt und konnte ohne weitere Aufarbeitung eingesetzt werden.

### Beispiel 2: Herstellung von Polymer 2

Die Herstellung erfolgte analog Polymer 1, jedoch mit folgender Monomerzusammensetzung:
50 g 2-Acrylamido-2-methylpropansulfonsäure, 223 g Acrylamidlösung (60%ige Lösung in Wasser), 18 g Vinylphosphonsäure.

### Beispiel 3: Herstellung von Polymer 3 (Vergleich)

Die Herstellung erfolgte analog Polymer 1, jedoch mit folgender Monomerzusammensetzung:
50 g 2-Acrylamido-2-methylpropansulfonsäure, 223 g Acrylamidlösung (60%ige Lösung in Wasser), 10 g Acrylsäure.

### Beispiel 4: Herstellung von Polymer 4 (Vergleich)

Die Herstellung erfolgte analog Polymer 1, jedoch mit folgender Monomerzusammensetzung:
50 g 2-Acrylamido-2-methylpropansulfonsäure, 223 g Acrylamidlösung (60%ige Lösung in Wasser).

Die Vergleichspolymere 3 und 4 wurden hergestellt, um zu beweisen, dass die Herstellung des Hydrogels vor allem auf der Wechselwirkung der Phosphonsäure-Funktion mit dem Vernetzer-Ion beruht. Nur wenn Vinylphosphonsäure enthalten ist, können auch in Gegenwart von Salzionen reversibel vernetzbare Hydrogele erzeugt werden. Dieses soll durch Beispiele 5 bis 10 belegt werden.

### Beispiel 5 (Vergleich): Vernetzung des Polymers aus Beispiel 4 in VE-Wasser

In einem kommerziell erhältlichem Waring Blender wurden 1 g Isotridecanolethoxylat (6EO) in 199 g VE-Wasser durch schnelles Mixen gelöst. Dann wurden 0,24 g Natriumthiosulfat unter Rühren zugegeben. 3,23 g der Polymeremulsion aus Beispiel 4 (Feststoffgehalt: 27 %) wurden in die Trombe des Rührbehälters gespritzt und es wurde vier weitere Minuten gerührt. Im Anschluss wurden 1 g Essigsäure-Lösung (6%ige Lösung in Wasser) und 1,04 g Zirkonium (IV)-Triethanolamin-Lösung (25 %ige Lösung in Wasser) langsam unter Rühren zugegeben und 1 weitere Minute gerührt.

Das Gel wurde in eine mit N₂ durchspülte zylindrische Messzelle eines Rheometers gefüllt und die Zelle druckdicht verschlossen. Um das Sieden der Probe zu unterbinden, wurde die geschlossene Messzelle mit einem Differentialdruck von 50 bar beaufschlagt. Für die Druckbelastung wurde N₂-Gas verwendet.

Zunächst wurde die Reversibilität der Vernetzung des Acrylsäure enthaltenden Vergleichspolymers in VE-Wasser bei 65 °C und 200 °C untersucht. Für diese Viskositätsmessungen wurde folgende Scherratenrampe vorgegeben: 6 Zyklen mit der Scherratenrampe 511 (3,5 min), 360 (15 s), 170 (15 s), 100 (15 s), 75 (15 s), 100 (13,5 min). Die gesamte Messung dauerte 90 Minuten.

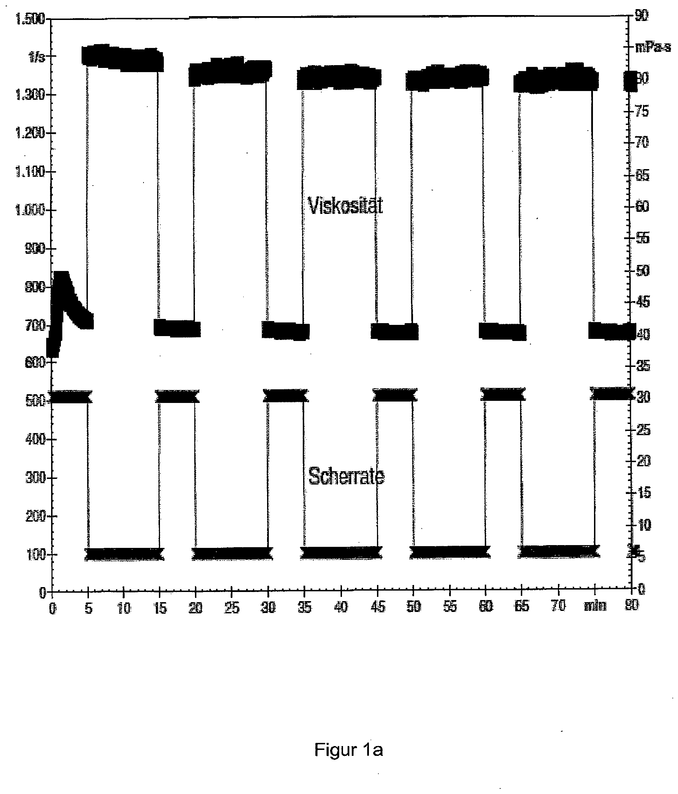

Figur 1a zeigt die Reversibilität der Vernetzung des Vergleichspolymeren aus Beispiel 4 bei 65 °C. Die obere Kurve in Figur 1a zeigt den Verlauf der Viskosität an und die untere Kurve zeigt den Verlauf der Scherrate an.

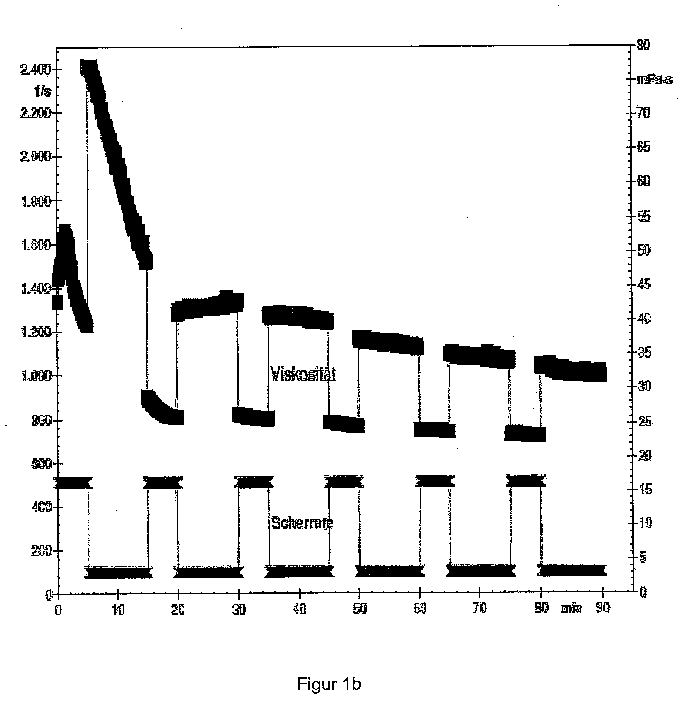

Figur 1b zeigt die Reversibilität der Vernetzung des Vergleichspolymeren aus Beispiel 4 bei 200 °C. Die obere Kurve in Figur 1b zeigt den Verlauf der Viskosität an und die untere Kurve zeigt den Verlauf der Scherrate an.

Die Viskositätsmessung bei 65 °C mit dem Vergleichspolymer 4 zeigt, dass die Vernetzung mit dem Zirkonium-Vernetzer in destilliertem Wasser nur schwach ausgeprägt ist (Figur 1a). Bei 200 °C ist die Viskosität so gering, dass kein stützmitteltragbares Hydrogel vorliegt (Figur 1b).

### Beispiel 6 (Vergleich): Vernetzung des Polymers aus Beispiel 4 in 2 %-iger KCI-Lösung

In einem kommerziell erhältlichen Waring Blender wurden 1 g Isotridecanolethoxylat (6EO) in 199 g VE-Wasser durch schnelles Mixen gelöst. Dann wurden 0,24 g Natriumthiosulfat und 4 g KCl unter Rühren zugegeben. 4,39 g der Polymeremulsion aus Beispiel 4 (Feststoffgehalt: 27 %) wurden in die Trombe des Rührbehälters gespritzt und es wurde vier weitere Minuten gerührt. Im Anschluss wurden 0,5 g 6%ige Essigsäure-Lösung und 0,8 g einer Zirkonium (IV)-Triethanolamin-Lösung (32,5 %ige Lösung in Ethanol) langsam unter Rühren zugegeben und 1 weitere Minute gerührt.

Das Gel wurde in eine mit N₂ durchspülte zylindrische Messzelle eines Rheometers gefüllt und die Viskosität bei der Scherrate 100 s⁻¹, 50 bar und 65 °C gemessen.

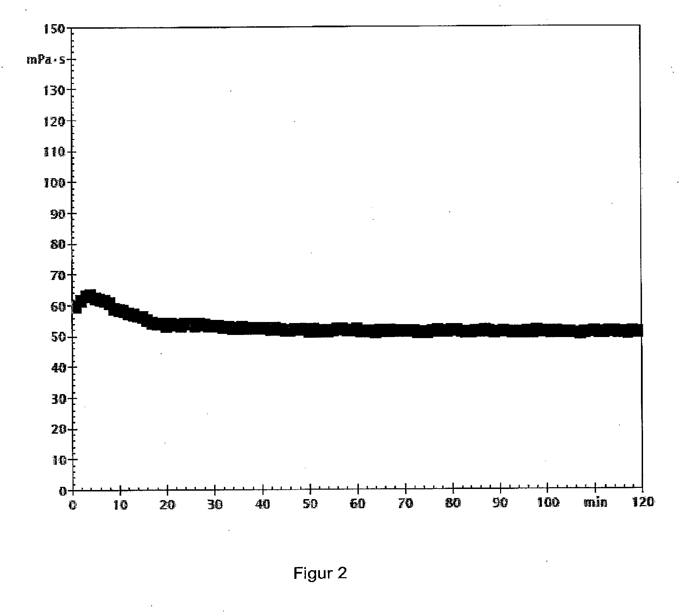

Figur 2 zeigt die Viskosität des Hydrogels in Gegenwart von 2 % KCl (Vergleichspolymer aus Beispiel 4, 100 s⁻¹ und 65 °C).

Das Hydrogel aus Polymer 4 weist bei konstanter Scherung in Gegenwart von 2 % KCl eine niedrige Viskosität auf und ist für Fracturing-Formulierungen mit KCl nicht geeignet (Figur 2).

### Beispiel 7 (Vergleich): Vernetzung des Polymers aus Beispiel 3 in VE-Wasser

Das Gel wurde mit der Polymeremulsion aus Beispiel 3 analog der im Beispiel 5 beschriebenen Vorgehensweise hergestellt und charakterisiert.

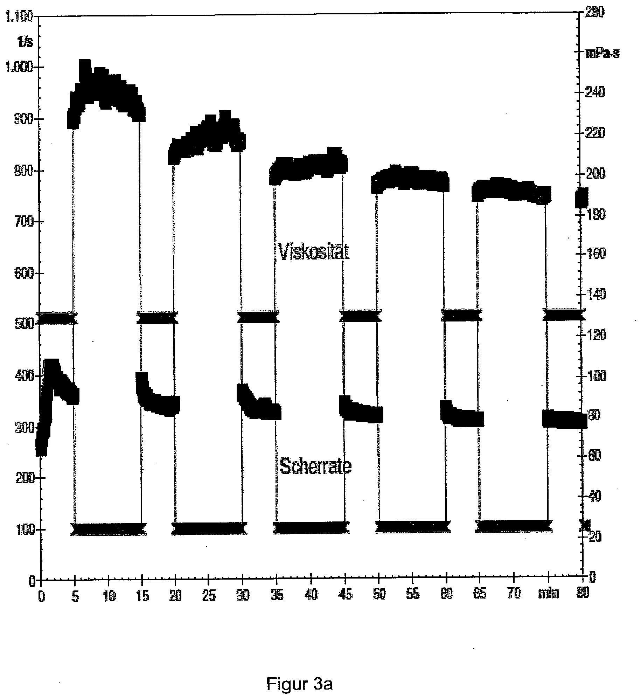

Figur 3a zeigt die Reversibilität der Vernetzung des Vergleichspolymeren aus Beispiel 3 bei 65 °C. Die obere Kurve in Figur 3a zeigt den Verlauf der Viskosität an und die untere Kurve zeigt den Verlauf der Scherrate an.

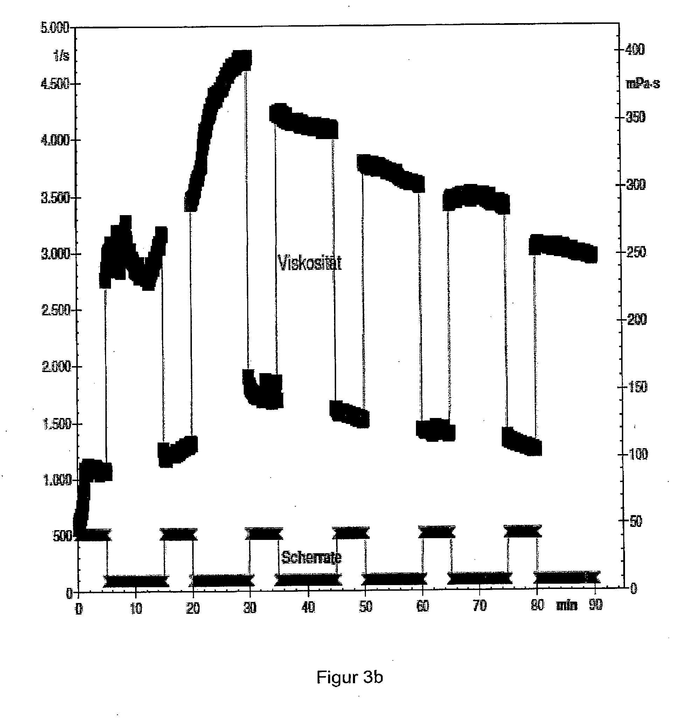

Figur 3b zeigt die Reversibilität der Vernetzung des Vergleichspolymeren aus Beispiel 3 bei 200 °C. Die obere Kurve in Figur 3b zeigt den Verlauf der Viskosität an und die untere Kurve zeigt den Verlauf der Scherrate an.

Das Hydrogel aus dem Vergleichspolymer 3, einem Copolymer aus AMPS, Acrylamid und Acrylsäure, weist im destillierten Wasser im Vergleich zum Vergleichspolymer aus Beispiel 4 sowohl bei 65 °C als auch bei 200 °C eine höhere Viskosität auf (Figuren 3a und 3b).

### Beispiel 8 (Vergleich): Vernetzung des Polymers aus Beispiel 3 in 2 %-iger KCl-Lösung

Das Gel wurde mit der Polymeremulsion aus Beispiel 3 analog der im Beispiel 6 beschriebenen Vorgehensweise hergestellt und charakterisiert.

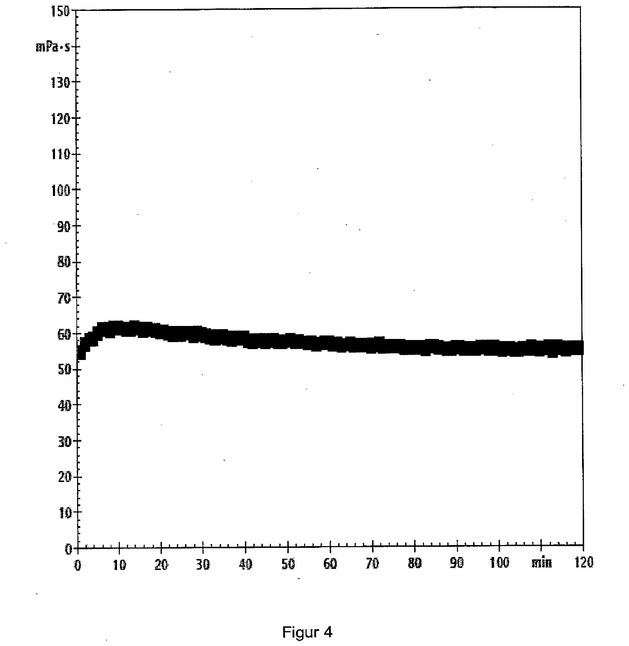

Figur 4 zeigt die Viskosität des Hydrogels in Gegenwart von 2 % KCl (Vergleichspolymer aus Beispiel 3, 100 s⁻¹ und 65 °C).

Das Hydrogel aus dem Vergleichspolymer 3, einem Copolymer aus AMPS, Acrylamid und Acrylsäure, weist wie das Hydrogel aus Beispiel 4 in Gegenwart von KCl keine Stabilität auf (Figur 4).

### Beispiel 9: Vernetzung des Polymers aus Beispiel 1 in VE-Wasser

Das Gel wurde mit der Polymeremulsion aus Beispiel 1 analog der im Beispiel 5 beschriebenen Vorgehensweise hergestellt und charakterisiert.

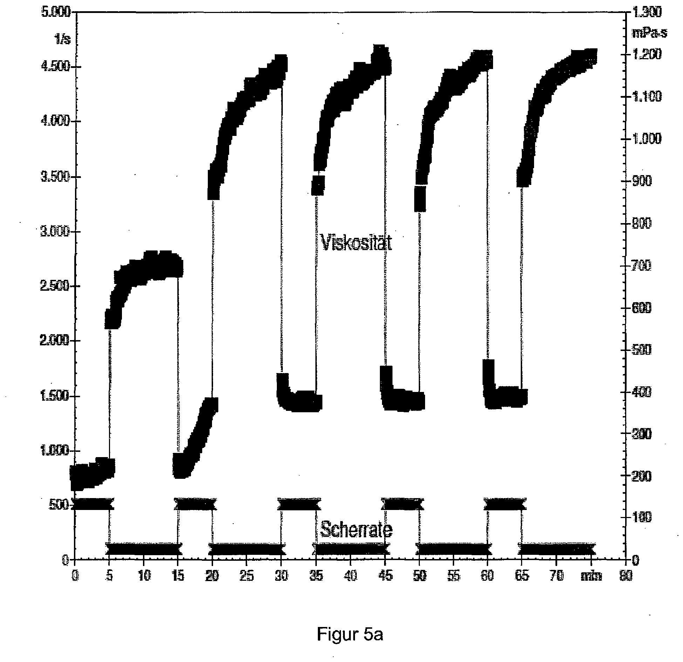

Figur 5a zeigt die Reversibilität der Vernetzung von Polymer 1 bei 65 °C. Die obere Kurve in Figur 5a zeigt den Verlauf der Viskosität an und die untere Kurve zeigt den Verlauf der Scherrate an.

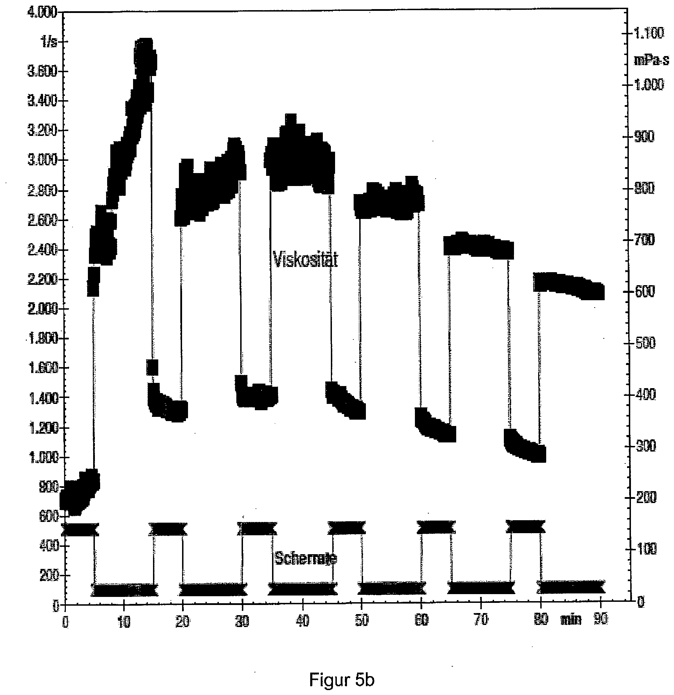

Figur 5b zeigt die Reversibilität der Vernetzung von Polymer 1 bei 200 °C. Die obere Kurve in Figur 5b zeigt den Verlauf der Viskosität an und die untere Kurve zeigt den Verlauf der Scherrate an.

Hydrogele aus dem Polymer 1 zeigen in destilliertem Wasser sowohl bei 65 °C als auch bei 200 °C strukturviskoses Verhalten. Sie sind reversibel vernetzbar und zum Stützmitteltransport bei Fracturing-Anwendungen geeignet.

### Beispiel 10: Vernetzung des Polymers aus Beispiel 1 in 2 %-iger KCl-Lösung

Das Gel wurde mit der Polymeremulsion aus Beispiel 1 analog der im Beispiel 6 beschriebenen Vorgehensweise hergestellt und charakterisiert.

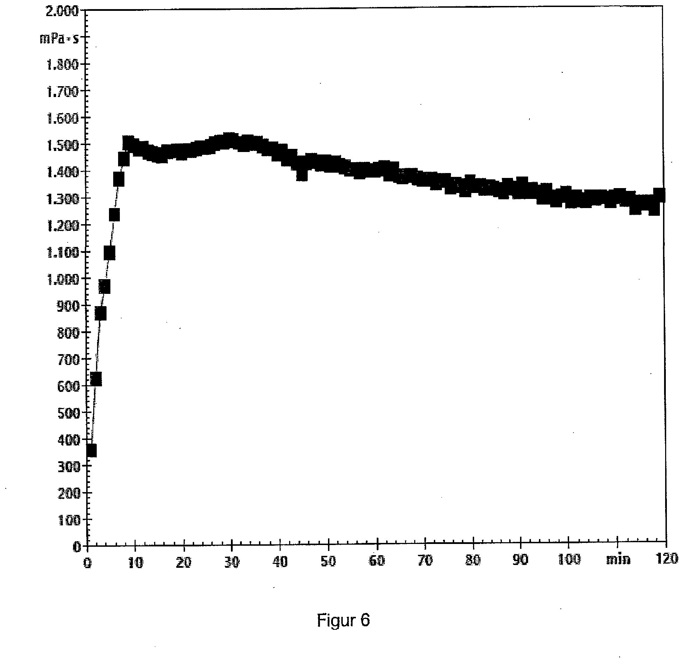

Figur 6 zeigt die Viskosität des Hydrogels in Gegenwart von 2 % KCl (Polymer 1, 100 s⁻¹ und 65 °C).

Das Hydrogel aus Poylmer 1 weist auch in Gegenwart von 2 % KCl eine hohe Viskosität auf und ist für den Einsatz als Verdickungsmittel in Fracfluiden geeignet.

### Beispiel 11: Vernetzung des Polymers aus Beispiel 2 in 2 %-iger KCl-Lösung bei 200°C, 160 °C und 82 °C

Das Gel wurde mit der Polymeremulsion aus Beispiel 2 analog der im Beispiel 6 beschriebenen Vorgehensweise hergestellt. Die Gelviskosität wurde am Rheometer bei 50 bar, 160 °C und einer Scherung von 100 s⁻¹ gemessen.

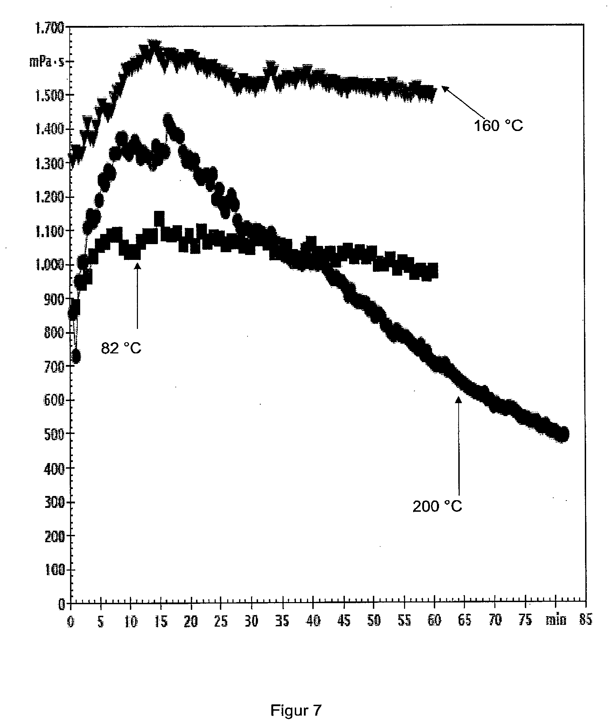

Figur 7 zeigt die Viskosität des Hydrogels in Gegenwart von 2 % KCl bei 200 °C, 160 °C, 82 °C (Polymer 2, 100 s⁻¹).

Mit Polymer 2 entstehen stabile Hydrogele, die in Gegenwart von 2 % KCl auch bei Temperaturen von 200 °C ausreichend hohe Viskosität aufweisen.

Beispiel 12: Polymer aus Beispiel 2 in künstlichem Meerwasser bei 160 °C und 82°C In einem kommerziell erhältlichem Waring Blender wurden 5,97 g NaCl und 0,60 g CaCl₂ in 192,43 g VE-Wasser durch schnelles Mixen gelöst. Dieses Wasser wurde in den folgenden Beispielen künstliches Meerwasser oder Elektrolytwasser genannt. Dann wurden 0,24 g Natriumthiosulfat unter Rühren zugegeben. 4,39 g der Polymeremulsion aus Beispiel 1 (Feststoffgehalt: 27 %) wurden in die Trombe des Rührbehälters gespritzt und es wurde vier weitere Minuten gerührt. Im Anschluss wurden 1 g 6%ige Essigsäure-Lösung und 0,26 g einer Zirkonium (IV)-Triethanolamin-Lösung (32,5 %ige Lösung in Ethanol) langsam unter Rühren zugegeben und 1 weitere Minute gerührt.

Das Gel wurde in eine mit N₂ durchspülte zylindrische Messzelle eines Rheometers gefüllt und die Viskosität bei der Scherrate 100 s⁻¹, 50 bar und 82 °C bzw. 160 °C gemessen.

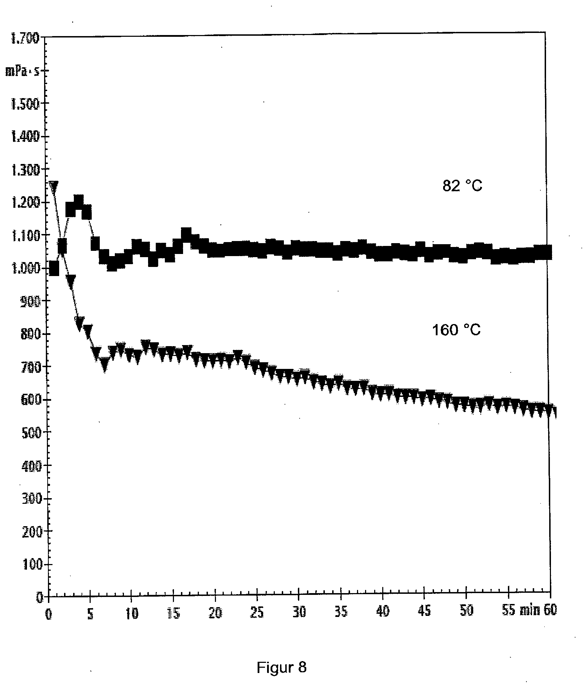

Figur 8 zeigt die Viskosität des Hydrogels in künstlichem Meerwasser bei 82 °C und 160 °C (Polymer 2, 100 s⁻¹).

### Beispiel 13 (Vergleich): Rehealing von Hydrogelen mit Polymer aus Beispiel 3 in künstlichem Meerwasser

Das Gel wurde mit dem Polymer aus Beispiel 3 analog der im Beispiel 12 beschriebenen Vorgehensweise hergestellt. Die Untersuchung der Reversibilität der Vernetzung des Acrylsäure-enthaltenden Vergleichspolymers aus Beispiel 3 in künstlichem Meereswasser erfolgte am Rheometer bei 50 bar und der jeweiligen Temperatur. Für diese Viskositätsmessungen wurde folgende Scherratenrampe vorgegeben: 6 Zyklen mit der Scherratenrampe 511 (3,5 min), 360 (15 s), 170 (15 s), 100 (15 s), 75 (15 s), 100 (13,5 min). Die gesamte Messung dauerte 90 Minuten.

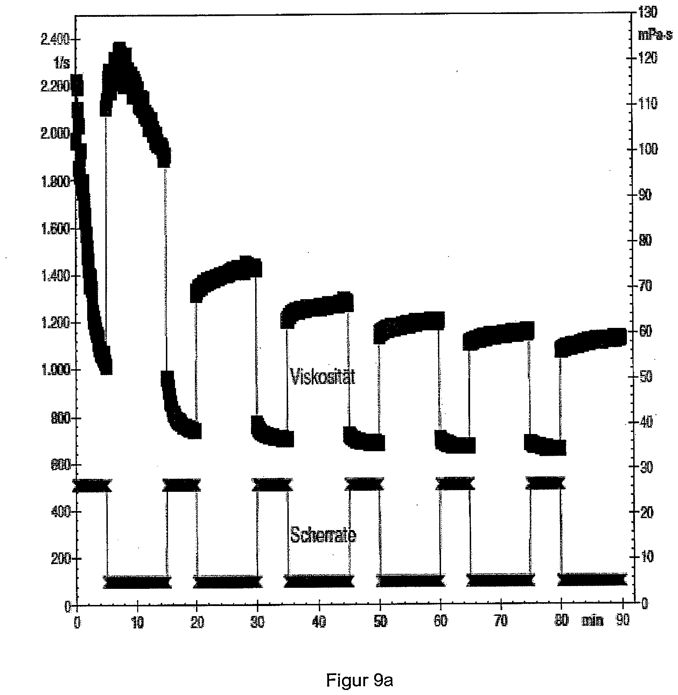

Figur 9a zeigt Reversibilität der Vernetzung in Elektrolytwasser enthaltend 3 % NaCl und 0,3 % CaCl₂ (Vergleichspolymer aus Beispiel 3 bei 82 °C). Die obere Kurve in Figur 9a zeigt den Verlauf der Viskosität an und die untere Kurve zeigt den Verlauf der Scherrate an.

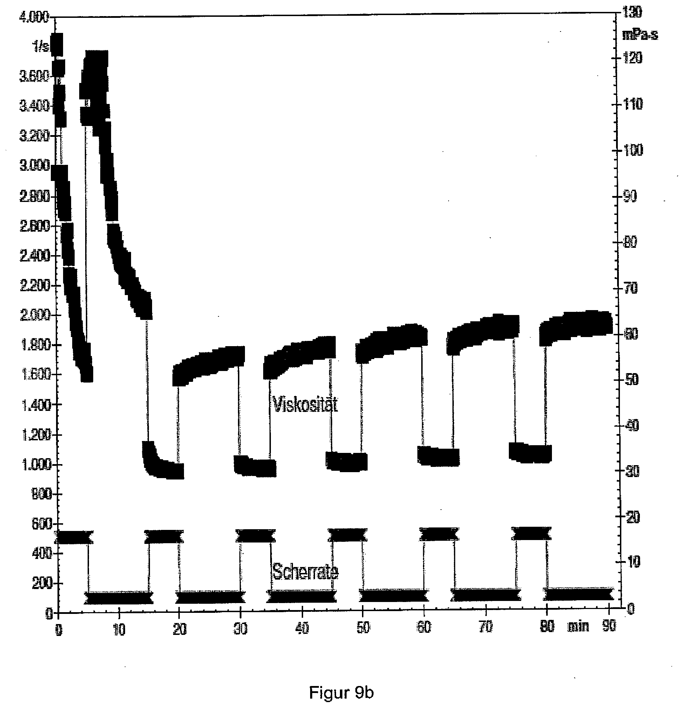

Figur 9b zeigt Reversibilität der Vernetzung in Elektrolytwasser enthaltend 3 % NaCl und 0,3 % CaCl₂ (Vergleichspolymer aus Beispiel 3 bei 130 °C). Die obere Kurve in Figur 9b zeigt den Verlauf der Viskosität an und die untere Kurve zeigt den Verlauf der Scherrate an.

In Elektrolytwasser mit 3 % NaCl und 0,3 % CaCl₂ weist das Hydrogel aus dem Acrylsäure-enthaltendem Polymer keine Stabilität auf.

### Beispiel 14: Rehealing von Hydrogelen mit Polymer aus Beispiel 2 in künstlichem Meerwasser

Das Gel wurde analog der im Beispiel 12 beschriebenen Vorgehensweise hergestellt und am Rheometer gemäß Beispiel 13 charakterisiert.

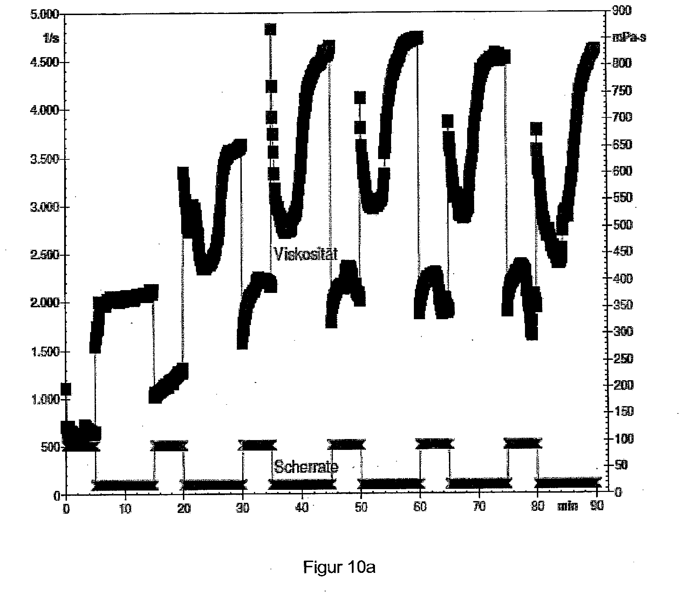

Figur 10a zeigt die Reversibilität der Vernetzung in Elektrolytwasser aus 3 % NaCl und 0,3 % CaCl₂ (Polymer 2, bei 82 °C). Die obere Kurve in Figur 10a zeigt den Verlauf der Viskosität an und die untere Kurve zeigt den Verlauf der Scherrate an.

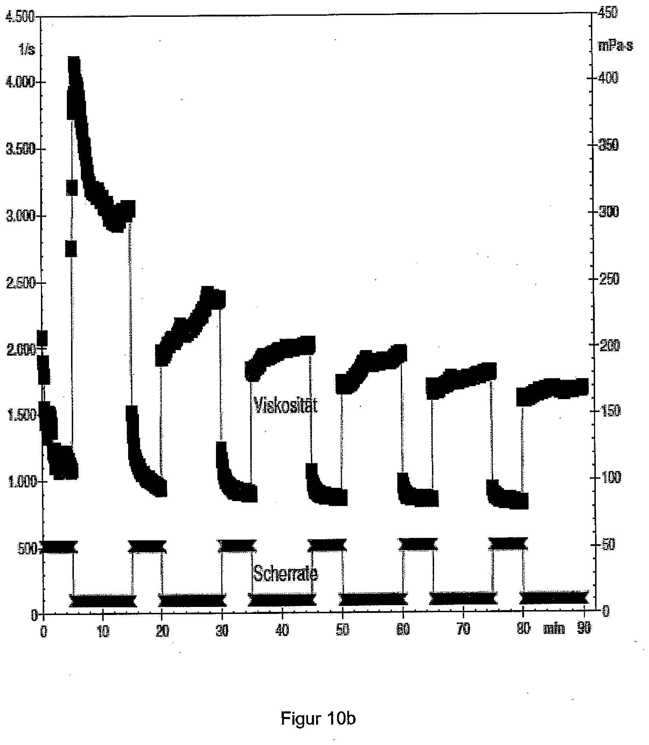

Figur 10b zeigt die Reversibilität der Vernetzung in Elektrolytwasser aus 3 % NaCl und 0,3 % CaCl₂ (Polymer 2, bei 130 °C). Die obere Kurve in Figur 10b zeigt den Verlauf der Viskosität an und die untere Kurve zeigt den Verlauf der Scherrate an.

Im Unterschied zum Hydrogel aus dem Acrylsäure-enthaltendem Polymer weist das Hydrogel aus dem Vinylphosphonsäure-enthaltenden Polymer 2 strukturviskoses Verhalten auf und kann für den Transport von Stützmitteln beim hydraulischen Aufbrechen von Lagerstättengestein eingesetzt werden.

## Patentansprüche

1. Temperaturstabiles Hydrogel enthaltend Wasser, mindestens einen Elektrolyten und ein mit mehrwertigen Metallionen vernetztes Copolymer, **dadurch gekennzeichnet, dass**
a) das Copolymer mindestens Struktureinheiten enthält, die zu 0,005-20 Gew. % von einer ethylenisch ungesättigten Phosphonsäure sowie deren Alkalimetallsalze und/oder Ammoniumsalze, zu 5-40 Gew. % von einer ethylenisch ungesättigten Sulfonsäure sowie deren Alkalimetallsalze und/oder Ammoniumsalze und zu 5-94,995 Gew. % von einem Amid einer ethylenisch ungesättigten Carbonsäure ausgewählt aus der Gruppe Acrylamid, Methacrylamid und/oder deren C₁-C₄-Alkylderivate abgeleitet sind, wobei sich die Prozentangaben auf die Gesamtmasse der bei der Copolymerisation eingesetzten Monomeren beziehen,
b) die mehrwertigen Metallionen für die Vernetzung des Copolymeren den Gruppen IIIA, IVB, VB, VIB, VIIB und/oder VIIIB des Periodensystems der Elemente angehören, und
c) der Gehalt an Elektrolyt im Hydrogel zwischen 0,075 und 25 Gew. %, bezogen auf die Gesamtmasse des Hydrogels beträgt und
d) der Elektrolyt Alkali-metallhalogenide und/oder Erdalkalimetallhalogenide sowie Salze von organischen Aminen umfasst.

2. Hydrogel nach Anspruch 1, **dadurch gekennzeichnet, dass** dieses bis 250°C Gelcharakter aufweist.

3. Hydrogel nach Anspruch 1, **dadurch gekennzeichnet, dass** der Elektrolytgehalt zwischen 0,1 und 10 Gew. %, bezogen auf die Gesamtmenge des Hydrogels beträgt.

4. Hydrogel nach Anspruch 1, **dadurch gekennzeichnet, dass** der Elektrolyt Natriumchlorid, Kaliumchlorid, Magnesiumchlorid und/oder Calciumchlorid umfasst.

5. Hydrogel nach Anspruch 1, **dadurch gekennzeichnet, dass** der Elektrolyt Salze von organischen Alkylaminen und/oder Hydroxalkylaminen, bevorzugt Trimethylammoniumchlorid und/oder Cholinchlorid, umfasst.

6. Hydrogel nach einem der Ansprüche 1 bis 5, **dadurch gekennzeichnet, dass** die ethylenisch ungesättigte Phosphonsäure ausgewählt wird aus der Gruppe Vinylphosphonsäure und/oder Allylphosponsäure sowie deren Alkalimetallsalzen und/oder Ammoniumsalzen.

7. Hydrogel nach einem der Ansprüche 1 bis 6, **dadurch gekennzeichnet, dass** das Amid der ethylenisch ungesättigten Carbonsäure ausgewählt wird aus der Gruppe Acrylamid und/oder Methacrylamid.

8. Hydrogel nach einem der Ansprüche 1 bis 7, **dadurch gekennzeichnet, dass** die ethylenisch ungesättigte Sulfonsäure ausgewählt wird aus der Gruppe Vinylsulfonsäure, 2-Acrylamido-2-methylpropansulfonsäure, 2-Methacrylamido-2-methylpropansulfonsäure, Styrolsulfonsäure, deren Alkalimetallsalzen und/oder Ammoniumsalzen, vorzugsweise 2-Acrylamido-2-methylpropan-sulfonsäure und/oder 2-Methacrylamido-2-methylpropansulfonsäure sowie deren Alkalimetallsalzen und/oder Ammoniumsalzen.

9. Hydrogel nach einem der Ansprüche 1 bis 8, **dadurch gekennzeichnet, dass** das synthetische Copolymer zusätzlich Struktureinheiten enthält, die von einer ethylenisch ungesättigten Carbonsäure sowie deren Alkalimetallsalzen und/oder Ammoniumsalzen abgeleitet sind und/oder die von einem zusätzlichen copolymerisierbaren Monomer, ausgewählt aus der Gruppe der Alkylester von ethylenisch ungesättigten Carbonsäuren, der Oxyalkylester von ethylenisch ungesättigten Carbonsäuren, der Ester von ethylenisch ungesättigten Carbonsäuren mit N, N-Dialkylalkanolaminen und/oder der N-Vinylamide abgeleitet sind, bevorzugt wird die ethylenisch ungesättigte Carbonsäure abgeleitet aus der Gruppe der Acrylsäure, Methacrylsäure, Fumarsäure, Maleinsäure, Itaconsäure und/oder Crotonsäure sowie deren Alkalimetallsalzen und/oder Ammoniumsalzen, bevorzugt ist der Alkylester von ethylenisch ungesättigten Carbonsäuren ein Alkylester der Acrylsäure, der Methacrylsäure, der Fumarsäure, der Maleinsäure, der Itaconsäure oder der Crotonsäure, der Oxyalkylester von ethylenisch ungesättigten Carbonsäuren ein 2-Hydroxyethylester der Acrylsäure, der Methacrylsäure, der Fumarsäure, der Maleinsäure, der Itaconsäure oder der Crotonsäure, der Ester von ethylenisch ungesättigten Carbonsäuren mit N, N-Dialkylalkanol-aminen N,N-Dimethylethanolaminmethacrylat, dessen Salz oder quaternäres Produkt und dass die N-Vinylamide N-Vinylformamid, N-Vinylacetamid, N-Vinyl-N-methylacetamid und/oder cyclische N-Vinylamid-Verbindungen sind, bevorzugt N-Vinylpyrrolidon, N-Vinylcaprolactam oder N-Vinylpyridin.

10. Hydrogel nach einem der Ansprüche 1 bis 9, **dadurch gekennzeichnet, dass** das synthetische Copolymer durch inverse Emulsionspolymerisation hergestellt worden ist.

11. Hydrogel nach einem der Ansprüche 1 bis 10, **dadurch gekennzeichnet, dass** das Copolymer in unvernetztem Zustand ein gewichtsmittleres Molekulargewicht von mindestens 1 Mio Dalton aufweist.

12. Hydrogel nach einem der Ansprüche 1 bis 11, **dadurch gekennzeichnet, dass** die mehrwertigen Kationen der Gruppen IIIA, IVB, VB, VIB, VIIB und/oder VIIIB des Periodensystems der Elemente ausgewählt werden aus der Gruppe der Kationen des Zirkoniums, Aluminiums, Bors, Titans, Chroms und/oder Eisens.

13. Hydrogel nach einem der Ansprüche 1 bis 12, **dadurch gekennzeichnet, dass** das Copolymer in einer Konzentration von 0,1 bis 10 Gew.-%, bevorzugt in einer Konzentration von 0,1 bis 2,5 Gew-% und besonders bevorzugt in einer Konzentration von 0,2 bis 1,5 Gew-%, jeweils bezogen auf die Gesamtmenge des Hydrogels, eingesetzt wird.

14. Verfahren zum hydraulischen Fracturing von Erdöl- oder Erdgaslagerstätten sowie zur Reservoirstimulation von unterirdischen Wässern, **dadurch gekennzeichnet, dass** ein Hydrogel nach einem der Ansprüche 1 bis 13 eingesetzt wird.

15. Verfahren nach Anspruch 14, **dadurch gekennzeichnet, dass** zur Herstellung des Hydrogels eine Lösung des Copolymeren nach Anspruch 1 in einer Elektrolytlösung hergestellt wird, entweder durch Einrühren der wässrigen Gallerten oder Lösungen aus der Gel- und Lösungspolymerisation oder durch Invertieren der inversen Polymeremulsion, dieser elektrolythaltigen Copolymerlösung vor dem Einbringen in die Lagerstätte eine Lösung eines Salzes enthaltend ein mehrwertiges Kation der Gruppen IIIA, IVB, VB, VIB, VIIB und/oder VIIIB des Periodensystems der Elemente und gegebenenfalls ein Puffer zugesetzt wird, so dass das Copolymer ein dreidimensionales Netzwerk ausbildet, und dass zu dieser Lösung gegebenenfalls weitere Additive und Stützkörper hinzugefügt werden und sie dann in die Lagerstätte eingepresst wird.

16. Verfahren nach Anspruch 14, **dadurch gekennzeichnet, dass** zur Herstellung des Hydrogels eine Lösung des Copolymeren nach Anspruch 1 zunächst in höherer Konzentration als der angestrebten Konzentration in entsalztem Wasser oder in einer Elektrolytlösung mit niedrigem Elektrolytgehalt erzeugt wird und diese Lösung dann anschließend mit einer Elektrolytlösung mit höherem Elektrolytgehalt so verdünnt wird, so dass die gewünschte Elektrolyt- und Polymerkonzentration erreicht wird.

17. Verfahren nach einem der Ansprüche 14 bis 16, **dadurch gekennzeichnet, dass** als Elektrolytlösung zur Herstellung der Copolymerlösung auschließlich oder teilweise salines Wasser, insbesondere Seewasser oder Formationswasser, verwendet wird.

18. Verwendung eines Hydrogels definiert in einem der Ansprüche 1 bis 13 zum hydraulischen Fracturing von Erdöl- oder Erdgaslagerstätten sowie zur Reservoirstimulation von unterirdischen Wässern

## Claims

1. Temperature-stable hydrogel containing water, at least one electrolyte and a copolymer cross-linked with polyvalent metal ions
**characterised in that**
a) the copolymer at least contains structural units of which 0.005-20 wt.% are derived from an ethylene unsaturated phosphonic acid and its alkali metal salts and/or ammonium salts, of which 5-40 wt.% are derived from an ethylene unsaturated sulfonic acid as well as alkali metal salts and/or ammonium salts thereof and of which 5-94.995 wt.% is derived from an amide of an ethylene unsaturated carboxylic acid selected from the group acrylamide, methacrylamide and/or C₁-C₄-alkyl derivatives thereof, wherein the percentage information relates to the total mass of the monomers used in the copolymerisation,
b) the polyvalent metal ions for the cross-linking of the polymers belong to the groups IIIA, IVB, VB, VIB, VIIB and/or VIIIB of the periodic table and
c) the content of the electrolyte in the hydrogel is between 0.075 and 25 wt.% relative to the total mass of the hydrogel and
d) the electrolyte comprises alkali metal halides and/or alkaline earth metal halides as well as salts of organic amines.

2. The hydrogel according to claim 1, **characterised in that** this has a gel character up to 250 °C.

3. The hydrogel according to claim 1, **characterised in that** the electrolyte content is between 0.1 and 10 wt.% relative to the total quantity of the hydrogel.

4. The hydrogel according to claim 1, **characterised in that** the electrolyte comprises sodium chloride, potassium chloride, magnesium chloride and/or calcium chloride.

5. The hydrogel according to claim 1, **characterised in that** the electrolyte comprises salts of organic alkyl amines and/or hydroxyalkyl amines, particularly preferably trimethylammonium chloride and/or choline chloride.

6. The hydrogel according to any one of claims 1 to 5, **characterised in that** the ethylene unsaturated phosphonic acid is selected from the group vinylphosphonic acid and/or allylphosponic acid as well as alkali metal salts and/or ammonium salts thereof.

7. The hydrogel according to any one of claims 1 to 6, **characterised in that** the amide of the ethylene unsaturated carboxylic acid is selected from the group of acrylamide and/or methacrylamide.

8. The hydrogel according to any one of claims 1 to 7, **characterised in that** the ethylene unsaturated sulfonic acid is selected from the group of vinylsulfonic acid, 2-acrylamido-2-methylpropane sulfonic acid, 2-methacrylamido-2-methylpropane sulfonic acid, styrene sulfonic acid, alkali metal salts and/or ammonium salts thereof, preferably 2-acrylamido-2-methylpropane sulfonic acid and/or 2-methacrylamido-2-methylpropane sulfonic acid as well as alkali metal salts and/or ammonium salts thereof.

9. The hydrogel according to any one of claims 1 to 8, **characterised in that** the synthetic copolymer additionally contains structural units which are derived from an ethylene unsaturated carboxylic acid as well as alkali metal salts and/or ammonium salts thereof, and which are derived from an additional copolymerisable monomer, selected from the group of alkyl esters of ethylene unsaturated carboxylic acids, oxyalkyl esters of ethylene unsaturated carboxylic acids, esters of ethylene unsaturated carboxylic acids with N, N-dialkylalkanol amines and/or N-vinylamides, preferably the ethylene unsaturated carboxylic acid is derived from the group of acrylic acid, methacrylic acid, fumaric acid, maleic acid, itaconic acid and/or crotonic acid as well as alkali metal salts and/or ammonium salts thereof, preferably the alkyl ester of ethylene unsaturated carboxylic acids is an alkyl ester of acrylic acid, methacrylic acid, fumaric acid, maleic acid, itaconic acid or crotonic acid, that the oxyalkylester of ethylene unsaturated carboxylic acids is a 2-hydroxyethyl ester of acrylic acid, methacrylic acid, fumaric acid, maleic acid, itaconic acid or crotonic acid, that the ester of ethylene unsaturated carboxylic acids with N, N-dialkylalkanol amines is N,N-dimethylethanolamine methacrylate, its salt or quaternary product and that the N-vinylamides are N-vinylformamide, N-vinylacetamide, N-vinyl-N-methylacetamide and/or cyclic N-vinylamide compounds, preferably N-vinylpyrrolidone, N-vinylcaprolactam or N-vinylpyridine.

10. The hydrogel according to any one of claims 1 to 9, **characterised in that** the synthetic copolymer has been produced by inverse emulsion polymerisation.

11. The hydrogel according to any one of claims 1 to 10, **characterised in that** the copolymer in the noncross-linked state has a weight-average molecular weight of at least 1 million Daltons.

12. The hydrogel according to any one of claims 1 to 11, **characterised in that** the polyvalent cations of Groups IIIA, IVB, VB, VIB, VIIB and/or VIIIB of the periodic table are selected from the group of cations of zirconium, aluminium, boron, titanium, chromium and/or iron.

13. The hydrogel according to any one of claims 1 to 12, **characterised in that** the copolymer is used in a concentration of 0.1 to 10 wt.%, preferably in a concentration of 0.1 to 2.5 wt.% and particularly preferably in a concentration of 0.2 to 1.5 wt.%, in each case relative to the total quantity of the hydrogel.

14. Method for hydraulic fracturing of crude oil or natural gas deposits as well as for reservoir stimulation of underground waters, **characterised in that** a hydrogel according to any one of claims 1 to 13 is used.

15. Method according to claim 14, **characterised in that** in order to produce the hydrogel, a solution of the copolymer according to claim 1 in an electrolyte solution is produced either by stirring in the aqueous gelatinous mass or solutions from the gel and solution polymerisation or by inverting the inverse polymer emulsion, before introducing into the deposit a solution of a salt containing a polyvalent cation of Groups IIIA, IVB, VB, VIB, VIIB and/or VIIIB of the periodic table and optionally a buffer is added to this electrolyte-containing copolymer solution, so that the copolymer forms a three-dimensional network and that optionally further additives and supporting bodies are added to this solution and this is then pressed into the deposit.

16. The method according to claim 14, **characterised in that** in order to produce the hydrogel a solution of the copolymer according to claim 1 is initially produced in higher concentration than the desired concentration in desalinated water or in an electrolyte solution having a low electrolyte content and this solution is then diluted with an electrolyte solution having higher electrolyte content so that the desired electrolyte and polymer concentration is achieved.

17. The method according to any one of claims 14 to 16, **characterised in that** exclusively or partially saline water, in particular seawater or formation water is used to produce the copolymer solution.

18. Use of a hydrogel defined in any one of claims 1 to 13 for hydraulic fracturing of crude oil or natural gas deposits and for reservoir stimulation of subterranean waters.

## Revendications

1. Hydrogel thermostable contenant de l'eau, au moins un électrolyte et un copolymère réticulé avec des ions métalliques multivalents, **caractérisé en ce que**
a) le copolymère contient au moins des unités structurales qui sont dérivées pour 0,005 à 20 % en poids d'un acide phosphonique éthyléniquement insaturé ainsi que de ses sels de métaux alcalins et/ou sels d'ammonium, pour 5 à 40 % en poids d'un acide sulfonique éthyléniquement insaturé ainsi que de ses sels de métaux alcalins et/ou sels d'ammonium et pour 5 à 94,995 % en poids d'un amide d'un acide carboxylique éthyléniquement insaturé choisi parmi le groupe acrylamide, méthacrylamide et/ou leurs dérivés alkyles en C₁-C₄, les données en pourcentages se rapportant à la masse totale des monomères utilisés dans la copolymérisation,
b) les ions métalliques multivalents pour la réticulation du copolymère appartiennent aux groupes IIIA, IVB, VB, VIB, VIIB et/ou VIIIB de la classification périodique des éléments, et
c) la teneur en électrolyte dans l'hydrogel est comprise entre 0,075 et 25 % en poids par rapport à la masse totale de l'hydrogel et
d) l'électrolyte contient des halogénures de métaux alcalins et/ou des halogénures de métaux alcalino-terreux ainsi que des sels d'amines organiques.

2. Hydrogel selon la revendication 1, **caractérisé en ce qu'**il présente un caractère de gel jusqu'à 250 °C.

3. Hydrogel selon la revendication 1, **caractérisé en ce que** la teneur en électrolyte est comprise entre 0,1 et 10 % en poids par rapport à la quantité totale de l'hydrogel.

4. Hydrogel selon la revendication 1, **caractérisé en ce que** l'électrolyte contient du chlorure de sodium, du chlorure de potassium, du chlorure de magnésium et/ou du chlorure de calcium.

5. Hydrogel selon la revendication 1, **caractérisé en ce que** l'électrolyte contient des sels d'alkylamines et/ou hydroxalkylamines organiques, de préférence du chlorure de triméthylammonium et/ou du chlorure de choline.

6. Hydrogel selon l'une des revendications 1 à 5, **caractérisé en ce que** l'acide phosphonique éthyléniquement insaturé est choisi parmi le groupe acide vinyl-phosphonique et/ou acide allylphosphonique ainsi que leurs sels de métaux alcalins et/ou sels d'ammonium.

7. Hydrogel selon l'une des revendications 1 à 6, **caractérisé en ce que** l'amide de l'acide carboxylique éthyléniquement insaturé est choisi parmi le groupe acrylamide et/ou méthacrylamide.

8. Hydrogel selon l'une des revendications 1 à 7, **caractérisé en ce que** l'acide sulfonique éthyléniquement insaturé est choisi parmi le groupe acide vinylsulfonique, acide 2-acrylamido-2-méthylpropane sulfonique, acide 2- méthacrylamido-2-méthylpropane sulfonique, acide styrène sulfonique, leurs sels de métaux alcalins et/ou sels d'ammonium, de préférence l'acide 2-acrylamido-2-méthylpropane sulfonique et/ou l'acide 2-méthacrylamido-2-méthylpropane sulfonique, ainsi que leurs sels de métaux alcalins et/ou sels d'ammonium.

9. Hydrogel selon l'une des revendications 1 à 8, **caractérisé en ce que**, le copolymère synthétique contient en outre des unités structurales, qui sont dérivées d'un acide carboxylique éthyléniquement insaturé ainsi que de ses sels de métaux alcalins et/ou sels d'ammonium, et/ou qui sont dérivées d'un monomère copolymérisable supplémentaire, choisi parmi le groupe des esters alkyliques d'acides carboxyliques éthyléniquement insaturés, des esters oxyalkyliques d'acides carboxyliques éthyléniquement insaturés, des esters d'acides carboxyliques éthyléniquement insaturés avec des N, N-dialkylalcanolamines et/ou des N-vinylamides, avec une préférence pour l'acide carboxylique éthyléniquement insaturé dérivé du groupe acide acrylique, acide méthacrylique, acide fumarique, acide maléique, acide itaconique et/ou acide crotonique ainsi que leurs sels de métaux alcalins et/ou sels d'ammonium, avec une préférence pour l'ester alkylique d'acides carboxyliques éthyléniquement insaturés, un ester alkylique de l'acide acrylique, de l'acide méthacrylique, de l'acide fumarique, de l'acide maléique ou de l'acide crotonique, l'ester oxyalkylique d'acides carboxyliques éthyléniquement insaturés, un ester 2-hydroxyéthylique de l'acide acrylique, de l'acide méthacrylique, de l'acide fumarique, de l'acide maléique, de l'acide itaconique ou de l'acide crotonique, l'ester d'acides carboxyliques éthyléniquement insaturés avec des N,N-dialkylalcanolamines méthacrylate de N,N-diméthylaminoéthyle, son sel ou produit quaternaire et **en ce que** les N-vinylamides sont le N-vinylformamide, N-vinylacétamide, N-vinyl-N-méthylacétamide et/ou des composés cycliques N-vinylamide, de préférence la N-vinylpyrrolidone, le N-vinylcaprolactame ou la N-vinylpyridine.

10. Hydrogel selon l'une des revendications 1 à 9, **caractérisé en ce que** le copolymère synthétique est formé par polymérisation en émulsion inverse.

11. Hydrogel selon l'une des revendications 1 à 10, **caractérisé en ce que** le copolymère à l'état non réticulé présente un poids moléculaire moyen d'au moins 1 million de daltons.

12. Hydrogel selon l'une des revendications 1 à 11, **caractérisé en ce que** les cations multivalents des groupes IIIA, IVB, VB, VIB, VIIB et/ou VIIIB de la classification périodique des éléments sont choisis parmi le groupe de cations de zirconium, aluminium, bore, titane, chrome et/ou fer.

13. Hydrogel selon l'une des revendications 1 à 12, **caractérisé en ce que** le copolymère est utilisé à une concentration de 0,1 à 10 % en poids, de préférence à une concentration de 0,1 à 2,5 % en poids, et de manière particulièrement préférée à une concentration de 0,2 à 1,5 % en poids par rapport à la quantité totale d'hydrogel.

14. Procédé de fracture hydraulique de gisements de pétrole ou de gaz naturel ainsi que pour la stimulation de réservoir d'eaux souterraines, **caractérisé en ce qu'**on utilise un hydrogel défini dans l'une des revendications 1 à 13.

15. Procédé selon la revendication 14, **caractérisé en ce que** pour la préparation de l'hydrogel, on prépare une solution de copolymère selon la revendication 1 dans une solution électrolytique, soit par incorporation de gélatines ou de solutions aqueuses à partir de la polymérisation de gel ou de solution ou par inversion de l'émulsion inverse de polymère, cette solution de copolymère à teneur en électrolyte étant, avant l'introduction dans le gisement, ajoutée à une solution d'un sel contenant un cation multivalent des groupes IIIA, IVB, VB, VIB, VIIB et/ou VIIIB de la classification périodique des éléments et le cas échéant à un tampon, de manière à ce que le copolymère forme un réseau tridimensionnel, et qu'à cette solution d'autres additifs et corps de soutien soient ajoutés le cas échéant, et qu'elle soit ensuite introduite sous pression dans le gisement.

16. Procédé selon la revendication 14, **caractérisé en ce que** pour la préparation de l'hydrogel une solution de copolymère selon la revendication 1 est d'abord préparée à une concentration supérieure à la concentration souhaitée dans l'eau désalinisée ou dans une solution électrolytique avec une faible teneur en électrolyte et cette solution est ensuite diluée avec une solution électrolytique à teneur élevée en électrolytes de manière à ce que la concentration souhaitée en électrolyte et en polymère soit atteinte.

17. Procédé selon l'une des revendications 14 à 16, **caractérisé en ce qu'**on utilise comme solution électrolytique pour la préparation de la solution de copolymère exclusivement ou partiellement de l'eau saline, en particulier de l'eau de mer ou de l'eau de formation.

18. Utilisation d'un hydrogel défini dans l'une des revendications 1 à 13 pour la fracture hydraulique de gisements de pétrole ou de gaz naturel ainsi que pour la stimulation de réservoir d'eaux souterraines
